# EUROPÄISCHE PATENTSCHRIFT

(11) **EP 2 478 621 B1**
(45) Veröffentlichungstag und Bekanntmachung des Hinweises auf die Patenterteilung: **23.12.2015**
(21) Anmeldenummer: 10757189.5
(22) Anmeldetag: 17.09.2010
(51) Int. Cl.: H02K 11/04

(54) **KÜHLEINRICHTUNG IN EINER GLEICHRICHTEREINRICHTUNG EINER ELEKTRISCHEN MASCHINE**
COOLING APPARATUS IN A RECTIFIER DEVICE OF AN ELECTRIC MACHINE
DISPOSITIF DE REFROIDISSEMENT D'UN DISPOSITIF REDRESSEUR D'UNE MACHINE ÉLECTRIQUE

(30) Priorität: 17.09.2009 DE 102009042567
(43) Veröffentlichungstag der Anmeldung: 25.07.2012
(73) Patentinhaber: Robert Bosch GmbH, 70442 Stuttgart (DE)
(72) Erfinder: BRAUN, Horst, 70469 Stuttgart (DE); HERBOLD, Klaus, 71679 Asperg (DE); GOLDSCHMIDT, Robert, 71679 Asperg (DE); PAETZOLD, Martin, 72074 Tuebingen (DE)
(86) Internationale Anmeldenummer: PCT/EP2010/063706
(87) Internationale Veröffentlichungsnummer: WO 2011/033067

(56) Entgegenhaltungen:
- EP-A1- 1 460 750
- EP-A2- 1 482 622
- DE-A1- 10 232 052
- DE-A1-102007 034 325
- DE-B- 1 253 806
- JP-A- 4 026 346
- JP-A- 10 056 760
- US-A1- 2002 053 844

## Beschreibung

### Stand der Technik

Aus der EP 0 960 464 B1 ist eine Kühleinrichtung in einer Gleichrichtereinrichtung einer elektrischen Maschine, ausgebildet als Wechselstromgenerator bekannt. Aus der DE 102 32 052 A1 ist ein Kühlkörper für eine Gleichrichtereinheit bekannt, die um Aufnahmen für Dioden Kühlluftdurchlässe aufweist.

### Offenbarung der Erfindung

Mit der vorgeschlagenen Lösung gemäß dem Anspruch 1 wird angestrebt, dass einerseits eine besonders gute Kühlwirkung um die Stromgleichrichter erreicht wird und andererseits ein niedriger Strömungswiderstand. Hintergreift ein sich am Kühlkörper befindendes Hakenelement den Führungsstutzen und führt dadurch den Führungsstutzen der Verschaltungseinheit, so ergibt sich dadurch die Möglichkeit, die Diodenkopfdrähte der Plusdioden frühzeitig auf die zugehörigen Anschlusskontakte in der Verschaltungseinheit auszurichten.

Ordnet man zwischen zwei nächstgelegenen Aufnahmen mehrere länglich geformte zweite Öffnungen an, die zwischen sich zwei bogenförmig erstreckenden Holmen erstrecken, wobei die zweiten Öffnungen zwischen zwei bogenförmigen Holmen durch Stege getrennt sind, welche sich vorzugsweise radial erstrecken, so erreicht man weiterhin einen einen besonders geringen Strömungswiderstand aufweisenden Kühlkörper, der darüber hinaus eine gute Kühlwirkung aufweist.

Ordnet man zwischen zwei Aufnahmen in Umfangsrichtung einen Überhang an, welcher mit einem Holm einstöckig verbunden ist, so verbessert man die Kühlwirkung der Kühleinrichtung weiter und nutzt hierfür Raumbereiche für die Kühlung, die sonst nicht genutzt würden.

Dadurch, dass der Überhang in eine Umfangsrichtung zumindest eine Öffnung aufweist, die eine geringere Materialstärke aufweist als andere Öffnungen des Überhangs, ergibt sich eine besonders gute Zugänglichkeit an den Anschlusskontakten.

In dem an dem radial innen angeordneten Holmen sich nach radial innen weitere länglich geformte Öffnungen anschließen, die wiederum nach radial innen durch einen weiteren Holm begrenzt sind, ergibt sich abermals eine verbesserte Kühlwirkung sowie eine, trotz der Durchflussmöglichkeit für Kühlmittel, gute Stabilität des Kühlkörpers.

Befindet sich zwischen einem Überhang und einer Aufnahme eine Aussparung, so ermöglicht diese eine Positionierung eines Führungsstutzens, in dieser Aussparung.

Dadurch, dass sich zwischen einem Überhang und einer Aufnahme ein rohrartiger Führungsstutzen und ein Anschlusskontakt einer Verschaltungseinheit befinden, ergibt sich eine besonders kompakte Bauweise.

Befinden sich die Aufnahme, die ersten Öffnungen und die zumindest eine länglich geformte zweite Öffnung in einem Sektor ausgehend von der zentralen Mitte, wobei der Sektor eine Winkelbreite zwischen 25° und 40° aufweist, so wird durch diese Maßnahme eine insgesamt gute Kühlung einer Diode erreicht und gleichzeitig der Materialaufwand/Bauraum optimiert.

Weist die Kühleinrichtung einen weiteren Löcher aufweisenden Kühlkörper auf, der im Wesentlichen ringsegmentförmig ist, wobei sich an zumindest einer Umfangsstelle ein Überhang befindet, so verbessert man die Kühlwirkung der Kühleinrichtung weiter und nutzt hierfür Raumbereiche für die Kühlung, die sonst nicht genutzt würden.

Ist der Überhang in Gestalt eines leiterartigen Kühlsegments mit Öffnungen ausgeführt, die sich länglich nach radial außen erstrecken, so wird die Kühlleistung erhöht, ohne den Strömungswiderstand zu sehr zu erhöhen.

Eine verbesserte Kühlleistung wird erreicht, indem der Überhang eine gerippte Oberflächenstruktur mit radial ausgerichteten länglichen Kühlrippen aufweist, wobei zwischen den Kühlrippen vorzugsweise ein kannelierter Körperbereich ist, der zudem vorzugsweise unter einem Steg durchgeführt ist.

Ist ein radiales Profil des weiteren Kühlkörpers in dem Umfangsbereich, in dem sich ein Überhang befindet, in Bezug zur Mitte in Ringbereiche eingeteilt, wobei der eine Ringbereich im Bezug zum anderen Ringbereich radial weiter innen liegend ist und sich im einen Ringbereich Kühlrippen befinden und sich im anderen Ringbereich Kühlrippen befinden, wobei die Kühlrippen des einen Ringbereichs ein größeres Volumen als die Kühlrippen des anderen Ringbereichs haben, so ergibt sich einerseits wiederum eine gute Kühlleistung aber auch eine den Umständen entsprechend geringe Steigerung des Luftwiderstands. Gleiches gilt auch für die Gestaltung hinsichtlich der Dicke der Rippen.

Befinden sich in axialer Richtung betrachtet auf einer Seite des Stegs der Verschaltungseinheit die einen Kühlrippen und auf der anderen Seite des Stegs die anderen Kühlrippen, so ist trotz einer Unterbrechung der sich radial weiter innen befindlichen Kühlrippen durch den Steg die Bauweise kompakt.

Ist bei dem Kühlkörper die Umgebung einer Aufnahme derart gestaltet, wonach unmittelbar um die Aufnahme ausgehend von einem Zentrum der Aufnahme und nach radial innen die ringförmige Wand einen größeren Umfangsbereich rund um die Aufnahme überstreckt als dies radial außerhalb des Zentrums der Fall ist, so wird dadurch die Oberfläche des Kühlkörpers nach radial innen vergrößert, wodurch ein zentraler Kühlluftstrom mit im Wesentlichen axialer Strömungsrichtung eine größere Oberfläche überströmt und dadurch die Kühlleistung an den einzelnen Aufnahmen erhöht wird. Durch die gleichzeitige Beschränkung der Wand ergibt sich eine Öffnung, die zwischen einem Führungsstutzen und der Wand angeordnet ist und somit auch von radial außen Luft über die Diode und die nach radial außen gerichtete Oberfläche der Wand streichen lässt.

Die unmittelbar um die Aufnahme herum und auf der der zentralen Mitte des Kühlkörpers abgewandten Seite der Aufnahme angeordnete Randrippe, die kleiner als die ringförmige Wand ist, führt ebenfalls zu einer Oberflächenvergrößerung und verbesserter Kühlleistung.

In dem sich an einem Innenrand des einen Kühlkörpers und am Innenrand des anderen Kühlkörpers Löcher gegenüberstehen, ergibt sich hier nicht nur eine besonderes effiziente Kühlwirkung, sondern auch ein geringer Strömungswiderstand.

Schließlich ist vorgesehen, dass sich Stege der Verschaltungseinheit größtenteils in einem im Bezug zur Mitte radial äußeren Bereich unterhalb des ersten Kühlkörpers befindet, wobei sich die Stege unter einer äußeren Hälfte seiner radialen Erstreckung , des Kühlkörpers befinden und sich dabei die Stege und vzw. ein Umfangsbogen zwischen dem Lagerschild und dem Kühlkörper befinden. Diese Anordnung ist in einem eher strömungsarmen Bereich der Kühleinrichtung angeordnet. Da die Verschaltungseinheit üblicherweise keinen Kühlungsbeitrag liefert, ist daher die Anordnung an dieser Position der Kühlung insgesamt förderlich, da kühlungswirksame Bauteile in kühlungswirksameren Bereichen angeordnet werden können.

### Kurze Beschreibung der Figuren

Es zeigen die
- Figur 1: einen Längsschnitt durch eine elektrische Maschine,
- Figur 2: eine Draufsicht auf einen Kühlkörper einer Kühleinrichtung einer Gleichrichtereinrichtung nach einem ersten Ausführungsbeispiel, welches nicht beansprucht wird.
- Figur 3: eine Untersicht des Kühlkörpers aus Figur 2,
- Figur 4: eine räumliche Ansicht des Kühlkörpers aus Figur 2,
- Figur 5a: und
- Figur 5b: je eine Detailansicht einer Variante des Kühlkörpers aus Figur 2,
- Figur 6: eine Ansicht eines weiteren Kühlkörpers der Kühleinrichtung der Gleichrichtereinrichtung des ersten Ausführungsbeispiels,
- Figur 7: eine weitere Ansicht des Kühlkörpers aus Figur 6,
- Figur 8: eine Draufsicht auf die Kühleinrichtung und die Gleichrichtereinrichtung des ersten Ausführungsbeispiels,
- Figur 9: eine Untersicht der Kühleinrichtung und der Gleichrichtereinrichtung aus Figur 8,
- Figur 10: eine räumliche Ansicht des Gegenstands aus Figur 8,
- Figur 11: eine ausschnittweise Seitenansicht auf die montierte Gleichrichtereinrichtung des ersten Ausführungsbeispiels,
- Figur 12: eine Seitenansicht auf die Gleichrichtereinrichtung des ersten Ausführungsbeispiels,
- Figur 13: eine Draufsicht auf einen Kühlkörper einer Kühleinrichtung einer Gleichrichtereinrichtung nach einem zweiten Ausführungsbeispiel,
- Figur 14a: und
- Figur 14b: eine räumliche Ansicht eines weiteren Kühlkörpers der Kühleinrichtung einer Gleichrichtereinrichtung nach einem zweiten Ausführungsbeispiel sowie eine ausschnittweise Seitenansicht,
- Figur 15: eine Draufsicht auf die Kühleinrichtung und die Gleichrichtereinrichtung nach dem zweiten Ausführungsbeispiel,
- Figur 16: eine Untersicht auf die Kühleinrichtung aus Figur 15,
- Figur 17a: und
- Figur 17b: eine Seiten- und eine Draufsicht auf einen Führungsstutzen nach beiden Ausführungsbeispielen,
- Figur 18: eine prinzipielle Schnittansicht durch den Schichtenaufbau nach beiden Ausführungsbeispielen,
- Figur 19: eine Seitenansicht auf die Gleichrichtereinrichtung nach dem zweiten Ausführungsbeispiel,
- Figur 20: eine räumliche Ansicht auf ein Lagerschild,
- Figur 21: eine Schnittdarstellung durch ein Podest nach beiden Ausführungsbeispielen,
- Figur 22: einen Ständer in einer Seitenansicht
- Figur 23: eine Draufsicht auf einen Kühlkörper einer Kühleinrichtung einer Gleichrichtereinrichtung nach einem dritten Ausführungsbeispiel,
- Figur 24: eine räumliche Ansicht des Kühlkörpers aus Figur 23,
- Figur 25: eine Draufsicht eines weiteren Kühlkörpers der Kühleinrichtung der Gleichrichtereinrichtung,
- Figur 25a: einen ersten Schnitt durch den Kühlkörper aus Figur 25,
- Figur 25b: einen zweiten Schnitt durch den Kühlkörper aus Figur 25,
- Figur 26: eine Draufsicht auf die Gleichrichtereinrichtung nach dem dritten Ausführungsbeispiel im montierten Zustand,
- Figur 27: eine Unteransicht der montierten Gleichrichtereinrichtung nach dem dritten Ausführungsbeispiel im montierten Zustand aus Figur 26,
- Figur 28: eine Draufsicht auf einen Kühlkörper einer Kühleinrichtung einer Gleichrichtereinrichtung nach einem vierten Ausführungsbeispiel,
- Figur 29: eine räumliche Ansicht des Kühlkörpers aus Figur 28,
- Figur 30: eine Ansicht eines weiteren Kühlkörpers der Kühleinrichtung der Gleichrichtereinrichtung nach dem vierten Ausführungsbeispiel,
- Figur 31: und
- Figur 32: eine Drauf- und eine Unteransicht der Gleichrichtereinrichtung nach dem dritten Ausführungsbeispiel,
- Figur 33: eine Draufsicht auf einen Kühlkörper einer Kühleinrichtung einer Gleichrichtereinrichtung nach einem fünften Ausführungsbeispiel,
- Figur 34: eine räumliche Ansicht eines weiteren Kühlkörpers der Kühleinrichtung der Gleichrichtereinrichtung nach dem fünften Ausführungsbeispiel,
- Figur 35: und
- Figur 36: eine Drauf- und eine Unteransicht der Gleichrichtereinrichtung nach dem fünften Ausführungsbeispiel im montieren Zustand.

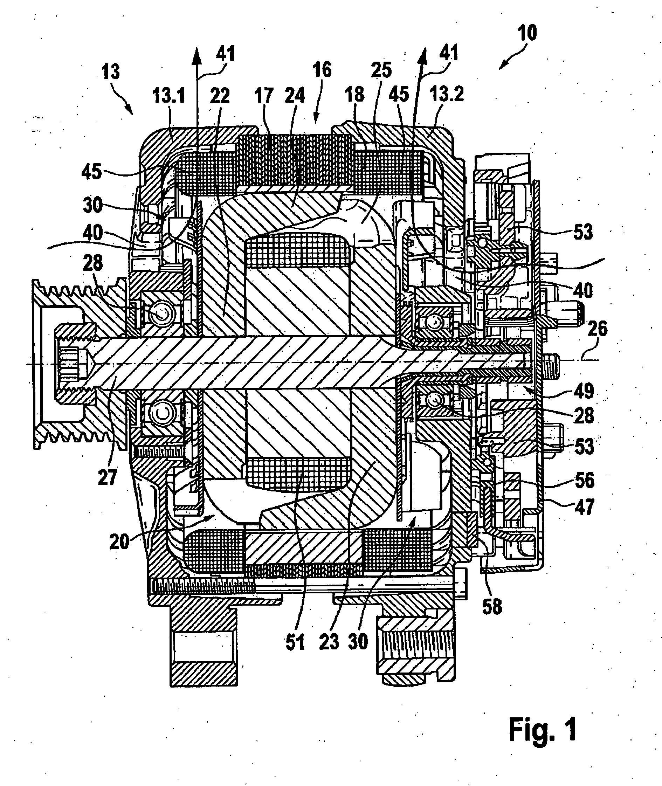

In Figur 1 ist ein Querschnitt durch eine elektrische Maschine 10, hier in der Ausführung als Generator bzw. Wechsel-, insbesondere Drehstromgenerator für Kraftfahrzeuge, dargestellt. Diese elektrische Maschine 10 weist u. a. ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen sogenannten Stator 16 auf, der einerseits aus einem im Wesentlichen kreisringförmigen Ständereisen 17 besteht, und in dessen nach radial innen gerichteten, sich axial erstreckenden Nuten eine Ständerwicklung 18 eingelegt ist. Dieser ringförmige Stator 16 umgibt mit seiner radial nach innen gerichteten genuteten Oberfläche einen Rotor 20, der als Klauenpolläufer ausgebildet ist. Der Rotor 20 besteht u. a. aus zwei Klauenpolplatinen 22 und 23, an deren Außenumfang jeweils sich in axialer Richtung erstreckende Klauenpolfinger 24 und 25 angeordnet sind. Die axiale Richtung ist hierbei durch eine Drehachse 26 des Rotors 20 bestimmt. Beide Klauenpolplatinen 22 und 23 sind im Rotor 20 derart angeordnet, dass deren sich in axialer Richtung erstreckende Klauenpolfinger 24 bzw. 25 am Umfang des Rotors 20 einander abwechseln. Es ergeben sich dadurch magnetisch erforderliche Zwischenräume zwischen den gegensinnig magnetisierten Klauenpolfingern 24 und 25, die als Klauenpolzwischenräume bezeichnet werden. Der Rotor 20 ist mittels einer Welle 27 und je einem auf je einer Rotorseite befindlichen Wälzlager 28 in den jeweiligen Lagerschilden 13.1 bzw. 13.2 drehbar gelagert.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen bzw. scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen, über die mittels der Lüfter 30 Kühlluft 41 als Kühlmittel in den Innenraum der elektrischen Maschine 10 eingesaugt wird. Diese Kühlluft wird durch die Rotation der Lüfter 30 nach radial außen beschleunigt, so dass diese durch den kühlluftdurchlässigen Wicklungsüberhang 45 hindurchtreten kann. Durch diesen Effekt wird der Wicklungsüberhang 45 gekühlt. Die Kühlluft nimmt nach dem Hindurchtreten durch den Wicklungsüberhang 45 bzw. nach dem Umströmen dieses Wicklungsüberhangs 45 einen Weg nach radial außen, durch hier in dieser Figur 1 nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 beispielsweise eine sogenannte Schleifringbaugruppe 49 ab, die dazu dient, eine Erregerwicklung 51 mit Erregerstrom zu versorgen. Um diese Schleifringbaugruppe 49 herum ist ein erster Kühlkörper 53 angeordnet, der hier als Pluskühlkörper wirkt. Als sogenannter Minuskühlkörper wirkt ein weiterer Kühlkörper, der in dieser verschiedentlich schematischen Figur nicht zu erkennen ist. Zwischen dem Lagerschild 13.2 und dem Kühlkörper 53 ist eine Anschlussplatte 56 angeordnet, die dazu dient, die im Minuskühlkörper angeordneten Minusdioden 58 und hier in dieser Darstellung nicht gezeigte Plusdioden im Kühlkörper 53 miteinander zu verbinden und somit eine an sich bekannte Brückenschaltung darzustellen.

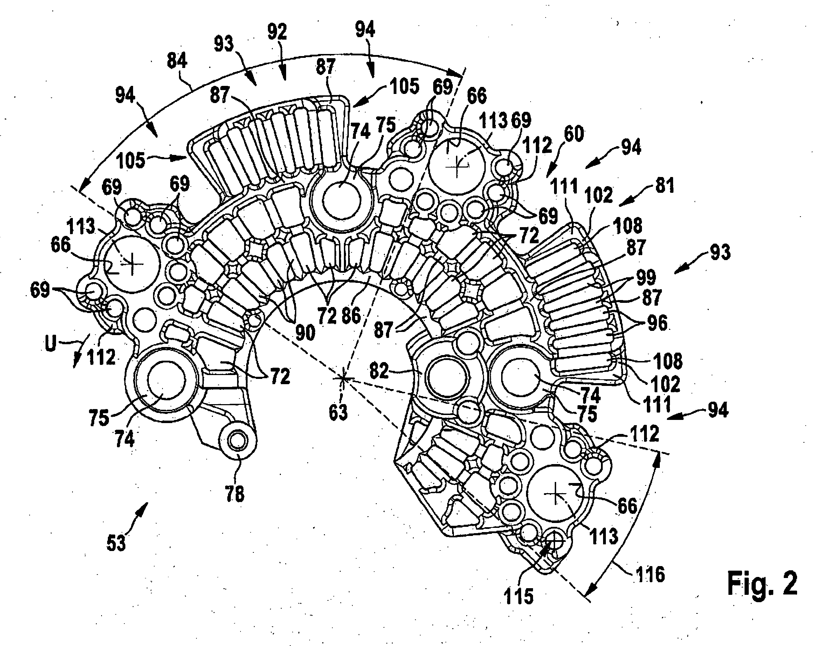

In Figur 2 ist ein erster Kühlkörper 53 abgebildet. Dieser Kühlkörper 53 weist einen bogenförmigen Körperbereich 60 auf. Dieser bogenförmigen Körperbereich 60 weist eine zentrale Mitte 63 auf. Sie deckt sich im an das Gehäuse 13.2 montierten Zustand mit der Drehachse 26. Der Kühlkörper 53 hat drei Aufnahmen 66, die dazu denen, jeweils einen Stromgleichrichter aufzunehmen. Der Stromgleichrichter ist hier beispielsweise eine Plusdiode. Die Aufnahmen 66 haben hier die Gestalt eines Loches, in die später beispielsweise sogenannte Einpressdioden (Plusdioden) eingedrückt werden. Alternativ kann beispielsweise auch eine Vertiefung in der Oberfläche des ersten Kühlkörpers 53 vorgesehen sein, um in der Vertiefung eine Diode durch Löten zu befestigen. Statt in einer Vertiefung kann eine Diode auch an einem vorgesehenen Ort in der Ebene aufgelötet werden. Darüber hinaus weist der Kühlkörper 53 etliche Öffnungen auf, die zur Durchströmung des im Betrieb heißen Kühlkörpers 53 mit Kühlmittel dienen. Um eine Aufnahme 66 herum, sind bogenartig aneinandergereiht erste Öffnungen 69 angeordnet. Diese ersten Öffnungen 69 sind in Umfangsrichtung U beiderseits einer Aufnahme 66, d. h. bspw. von der Mitte 63 aus gesehen rechts und links, angeordnet. Zwischen den Aufnahmen 66 und der zentralen Mitte 63 ist in Richtung zur zentralen Mitte 63 zumindest eine länglich geformte zweite Öffnung 72 angeordnet, wobei die zweite Öffnung 72 mit ihrer länglichen Form zumindest im Wesentlichen auf die zentrale Mitte 63 ausgerichtet ist. In weiterer Näherung kann auch festgestellt werden, dass zwischen den Aufnahmen 66 mit den ersten Öffnungen 69 und der zentralen Mitte 63 in Richtung zur zentralen Mitte 63 mehrere länglich geformte zweite Öffnungen 72 angeordnet sind, wobei die zweiten Öffnungen 72 mit ihrer länglichen Form zumindest im Wesentlichen auf die zentrale Mitte 63 ausgerichtet sind. Länglich bedeutet, dass sich die Öffnungen 72 in radialer Richtung länger als in Umfangsrichtung erstrecken.

In dem Körperbereich 60 sind weiters drei zylindrische mit je einem Loch 74 versehene Senkbereiche 75 vorgesehen. Dort ist die Materialstärke des Kühlkörpers 53 auf ca. 40% dessen reduziert, die bei den Aufnahmen 66 vorgesehen ist. Diese Senkbereiche dienen bei der Montage zur Befestigung der Gleichrichtereinrichtung an die äußere Seite des Lagerschilds 13.2. Eine Gewindehülse 78 dient zur Befestigung und Kontaktherstellung mit einem weiteren Bauteil der Gleichrichtereinrichtung. Ein Einsetzdom 82 dient zur späteren Aufnahme und Befestigung eines sogenannten B+- Bolzens (B-Plus-Bolzen), an dem ein Ladekabel befestigt wird, um einer Fahrzeug batterie elektrischen Strom zuführen zu können.

Wie bereits erwähnt, sind vorzugsweise mehrere Aufnahmen 66 vorhanden, die am Umfang 81, d. h. vorzugsweise am bzw. im Bereich des Außenumfangs, des Kühlkörpers 53 voneinander beabstandet angeordnet sind. Am Außenumfang bedeutet hauptsächlich in der radial äußeren Hälfte

Aus Figur 2 ist zu entnehmen, dass in einem Segment 84 zwischen zwei Aufnahmen 66 ein vorzugsweise einstückig angeformter Überhang 92 des Kühlkörpers 53 angeordnet ist, der hier im Beispiel mit mehreren länglich geformten zweite Öffnungen 72 ausgeführt ist, die sich zwischen zwei bogenförmig erstreckenden Holmen 87 erstrecken. Der Überhang 92 ist beiderseits in Umfangsrichtung U durch große buchtförmige Aussparungen 94 von den Aufnahmen 66 und deren ersten Öffnungen 69 getrennt bzw. beabstandet. Ein radial inneres Ende der buchtförmigen Aussparungen 94 ist von der zentralen Mitte 63 weniger weit entfernt als ein Zentrum 113 einer Aufnahme 66. Die zweiten Öffnungen 72 zwischen zwei bogenförmigen Holmen 87 sind durch Stege 90 getrennt. Die Stege 90 erstrecken sich vorzugsweise radial. Die beiden Holme 87 verlaufen zumindest in etwa kreisbogenförmig.

Im Segment 84 zwischen zwei Aufnahmen 66 erstreckt sich von dem äußeren der beiden eben erwähnten Holme 87 nach radial außen ein leiterartiges Kühlsegment 93, als Ausführungsbeispiel eines Überhangs 92, welches mit dem einen Holm 87 einstückig verbunden ist. Dieses leiterartige Kühlsegment 93 weist ebenso längliche Kühlluftöffnungen 96 auf, die durch Stege 99 voneinander getrennt sind. Nach radial außen hin sind diese Kühlluftöffnungen 96 durch einen Holm 102 begrenzt. In Umfangsrichtung U weist das Kühlsegment 93 zu dessen seitlichen Rand 105 hin zumindest eine Öffnung 108 auf, deren Umrandung 111 teilweise eine geringere Materialstärke als andere Öffnungen 96 des leiterartigen Kühlsegments 93 hat. Insbesondere ist vorgesehen, dass der eine Aussparung 94 begrenzende seitliche Teil der Umrandung 111 und ggf. der radial äußere der seitlichen Öffnungen 108 eine geringere Materialstärke aufweist.

Zwischen den Aufnahmen 66 auf ca. ein-Uhr- und vier-Uhr-Position (Figur 2) befindet sich ebenfalls ein Kühlsegment 93, das analog zu dem eben beschriebenen Kühlsegment 93 gestaltet ist.

Um die Aufnahmen 66 herum sind die Öffnungen 69 angeordnet. Zur Verbesserung des Zugriffs zu nachfolgend gezeigten Anschlusskontakten, die in der Gleichrichtereinrichtung neben den Öffnungen 69 positioniert werden, ist vorgesehen, Umrandungen 112 der Öffnungen 69 auf der Seite der Öffnungen 69, die einem Zentrum 113 einer Aufnahme 66 abgewandt sind, in ihrer Materialstärke in Achsrichtung (Drehachse 26) bzw. in Richtung einer Profilachse 115 weniger stark auszuführen, als dies zwischen den Aufnahmen 66 und den Öffnungen 69 der Fall ist. Aus dem gleichen Grund weisen die seitlichen Öffnungen 108 eine geringere Materialstärke auf. Die Profilachse 115 erstreckt sich längs dem Profil bzw-Dürchgangsprofil einer Öffnung 69.

An die beiden äußeren Holme 87 schließen nach radial innen in einer weiteren Reihe und durch einen weiteren Holm 86 nach radial innen begrenzt nach radial innen weitere länglich geformte Öffnungen 72 an.

Die Aufnahme 66, die ersten Öffnungen 69 und die zumindest eine länglich geformte zweite Öffnung 72 ist einem Sektor 116 ausgehend von der zentralen Mitte (63) befindlich, wobei der Sektor 116 eine Winkelbreite zwischen 25° und 40° aufweist (alle Ausführungsbeispiele).

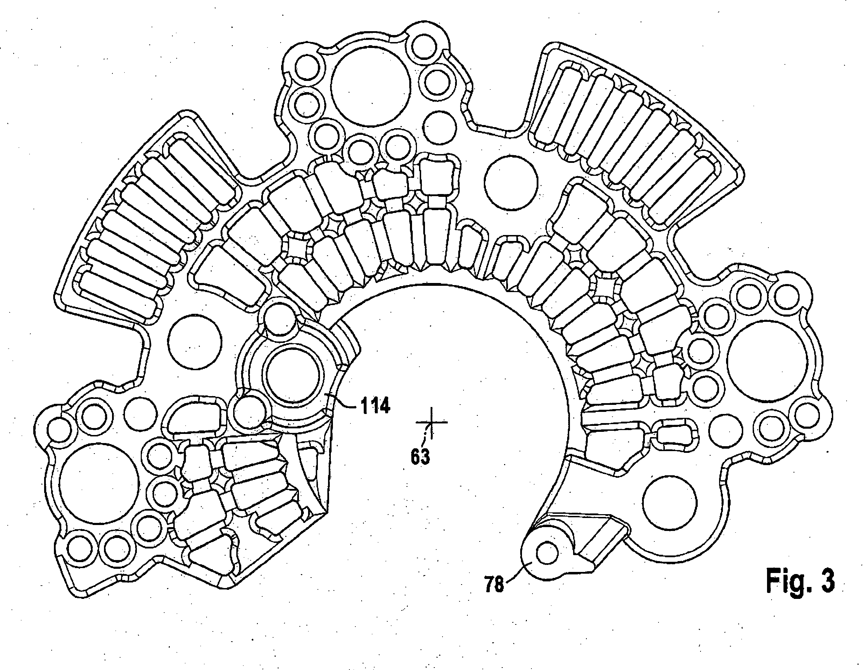

In Figur 3 ist die in Figur 2 nicht erkennbare Rückseite des Kühlkörpers 53 dargestellt. Beide Seiten sind bereichsweise zueinander im Wesentlichen parallel. In eine Vertiefung 114 wird später ein B+-Bolzens mit seinem Rundkopf so durchgesteckt, das der Rundkopf in der Vertiefung 114 Platz findet und ein Schraubgewinde von der in Figur 2 erkennbaren Seite sichtbar ist.

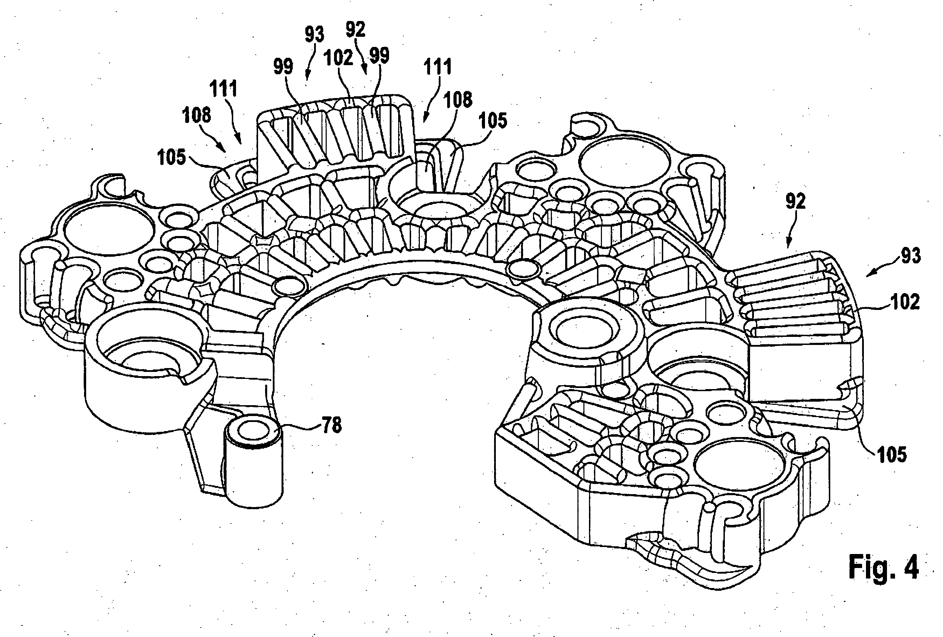

Figur 4 zeigt den Kühlkörper 53 in einer räumlichen Ansicht von der in Figur 2 dargestellten Seite. Hier sind die Überhänge 92 bzw. leiterartigen Kühlsegmente 93 gut zu erkennen. Ganz besonders gilt dies für die Öffnungen 108 und deren seitlichen Rand 105, deren Umrandung 111 teilweise eine geringere Materialstärke als andere Öffnungen 96 des Überhangs 92 bzw. des leiterartigen Kühlsegments 93 hat.

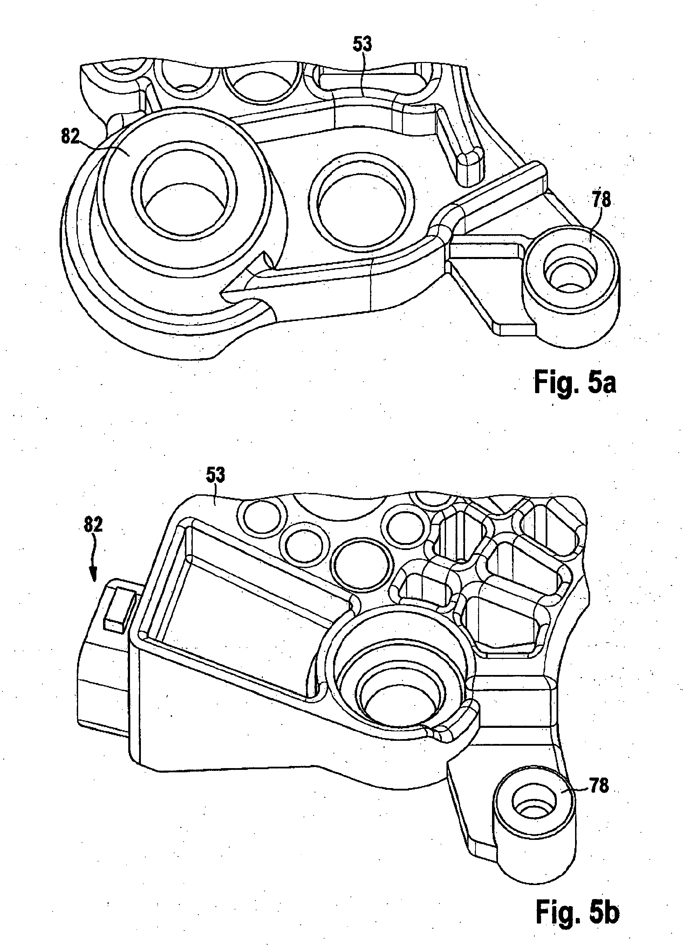

Die Figuren 5a und 5b zeigen verschiedene Details und damit auch Alternativen zur Befestigung eines B+-Bolzens. In Figur 5a ist in Bezug zur Darstellung in Figur 2 neben dem an der Position "9-Uhr" befindlichen Senkbereich 75 ein alternativer oder zusätzlicher Einsatzdom 82 vorgesehen, in den ein zusätzlicher oder alternativer B+-Bolzen eingesetzt werden kann. In Figur 5b ist in abgewinkelter Weise ein Einsatzdom 82 vorgesehen. Auf der Unterseite des Kühlkörpers 53 kann von rechts in den Einsatzdom 82 ein B+-Bolzen eingesetzt werden.

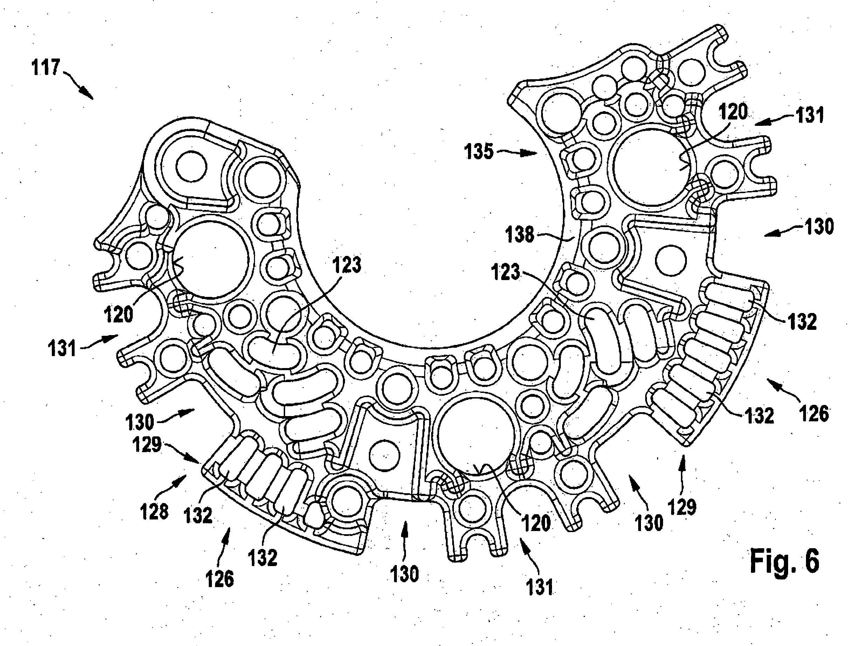

In Figur 6 ist ein weiterer Kühlkörper 117 abgebildet. Der Kühlkörper 117 hat drei Aufnahmen 120, die dazu dienen, jeweils einen Stromgleichrichter aufzunehmen. Der Stromgleichrichter ist hier beispielsweise eine Minusdiode. Die Aufnahmen 120 haben hier die Gestalt eines Loches, in die später beispielsweise sogenannte Einpressdioden (Minusdioden) eingedrückt werden. Alternativ kann beispielsweise auch eine Vertiefung in der Oberfläche des weiteren Kühlkörpers 117 vorgesehen sein. Darüber hinaus weist der Kühlkörper 120 etliche Öffnungen 123 auf, die zur Durchströmung des im Betrieb heißen Kühlkörpers 120 mit Kühlmittel dienen.

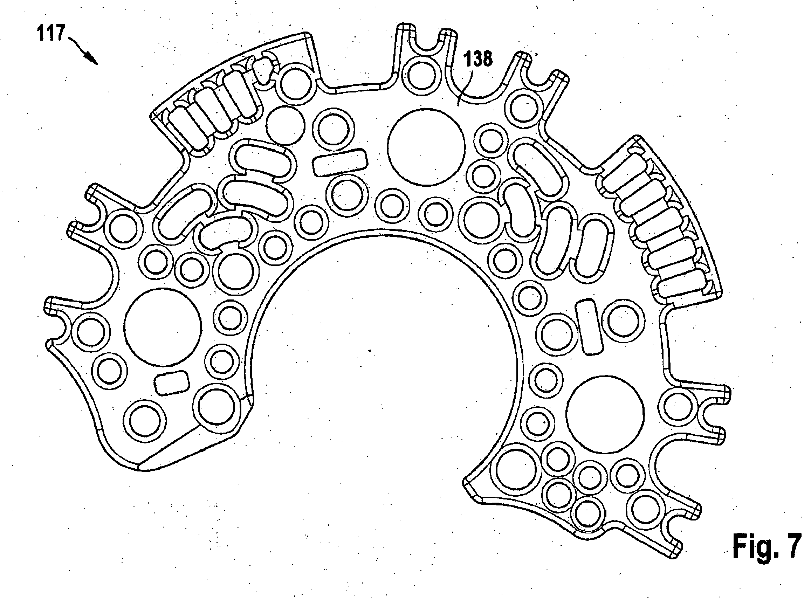

An zumindest einer Umfangsstelle 126 befindet sich auch hier ein vorzugsweise einstückig angeformter Überhang 127 in Gestalt eines leiterartigen Kühlsegments 129 Dieses leiterartige Kühlsegment 129 hat Öffnungen 132, die sich länglich nach radial außen erstrecken. Das Kühlsegment 129 erstreckt sich über einen definierten Umfangsbereich jeweils zwischen zwei Aufnahmen 120. Am Innenumfang 135 ist der Kühlkörper 117 abgeschrägt, Abschrägung 138. Wie in Figur 7 erkennbar ist, ist die später zum ersten Kühlkörper 53 gerichtete Oberfläche 138 im Wesentlichen eben. Eine Außenkontur 128 des weiteren Kühlkörpers 117 weist beiderseits des Überhangs 127 je eine buchtförmige Aussparung 130 bspw. unmittelbar daneben auf. Diese buchtförmigen Aussparungen 130 sind wiederum in Umfangsrichtung betrachtet jeweils zwischen dem Überhang 127 und je einer weiteren Aussparung 131 befindlich. In Richtung der vorgesehenen Drehachse 26 kann des Weiteren festgestellt werden, dass sich der Überhang 127, die Aussparung 130 und die Aussparung 131 jeweils in Bezug zur Drehachse 26 auf einem gleichen Radius befinden.

Im Zusammenbau der Kühleinrichtung ist vorgesehen, dass die beiden Kühlkörper 53 und 117 durch- und zwischenströmbar mit Abstand übereinander geschichtet und das leiterartige Kühlsegment 129 des weiteren Kühlkörpers 117 über dem leiterartigen Kühlsegment 93 des ersten Kühlkörpers 53 angeordnet ist. Es ist dem entsprechend eine Kühleinrichtung 141 offenbart, wobei diese einen weiteren Löcher 123 aufweisenden Kühlkörper 117 hat, der im Wesentlichen ringsegmentförmig ist, wobei sich an zumindest einer Umfangsstelle 126 ein leiterartiges Kühlsegment 129 befindet, wobei die beiden Kühlkörper 53, 117 durch- und zwischenströmbar mit Abstand übereinander geschichtet sind und das leiterartige Kühlsegment 129 des weiteren Kühlkörpers 117 über dem leiterartigen Kühlsegment 93 des ersten Kühlkörpers 53 angeordnet ist.

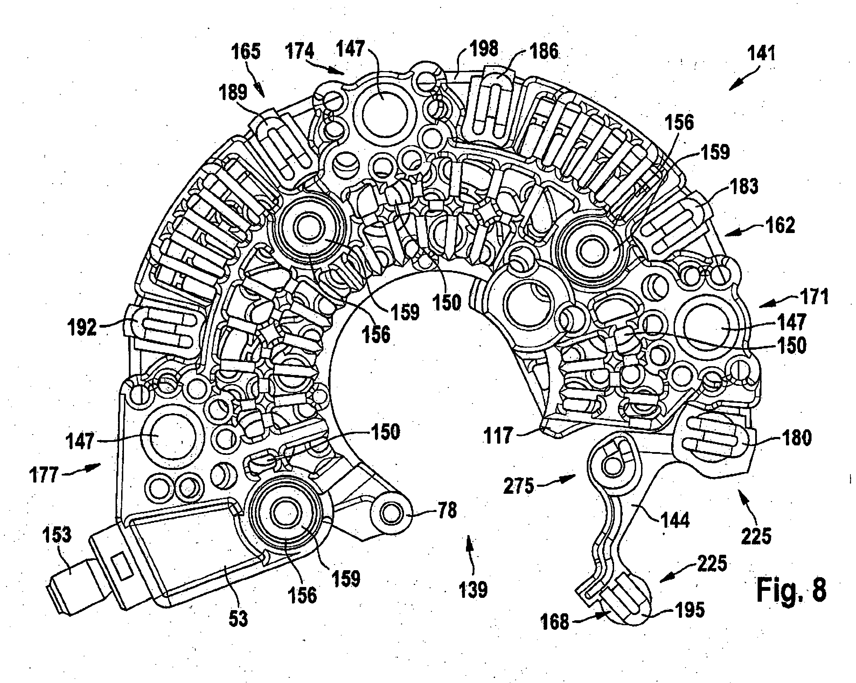

Figur 8 zeigt die zur Gleichrichtereinrichtung 139 zusammengebaute Kühleinrichtung 141 aus erstem Kühlkörper 53 (Pluskühlkörper), zweitem Kühlkörper 117 (Minuskühlkörper), der Verschaltungseinheit 144, positiven Stromgleichrichtern 147 (Plusdioden), negativen Stromgleichrichtern 150 (Minusdioden), B+-Bolzen 153, Isolationshülsen 156 und Nieten 159 (Rohrnieten). Des Weiteren sind hier nicht erkennbare Distanzstücke verwendet. Die Ansicht auf die Kühleinrichtung 141 entspricht in Bezug zur Figur 1 bei abgenommener Schutzkappe 47 der Ansicht von rechts in Richtung der Drehachse 26.

Die Verschaltungseinheit 144 weist in bekannter Weise mehrere Leiterabschnitte 162, 165 und 168 auf, die dazu dienen je ein Paar 171, 174 und 177 aus je einem positiven Stromgleichrichter 147 (Plusdiode) und je einem negativen Stromgleichrichter 150 miteinander so zu verschalten, dass die an den Anschlusskontakten 180, 183, 186, 189,192 und 195 (über den Umfangsbogen 198) angeschlossenen Ständerwicklungen und die von ihnen gelieferte Wechselspannung gleichgerichtet wird. Die Anschlusskontakte 180 und 183 sind mit dem Paar 171, die Anschlusskontakte 186 und 189 sind mit dem Paar 174 und die Anschlusskontakte 192 und 195 (über den Umfangsbogen 198) sind mit dem Paar 177 verbunden.

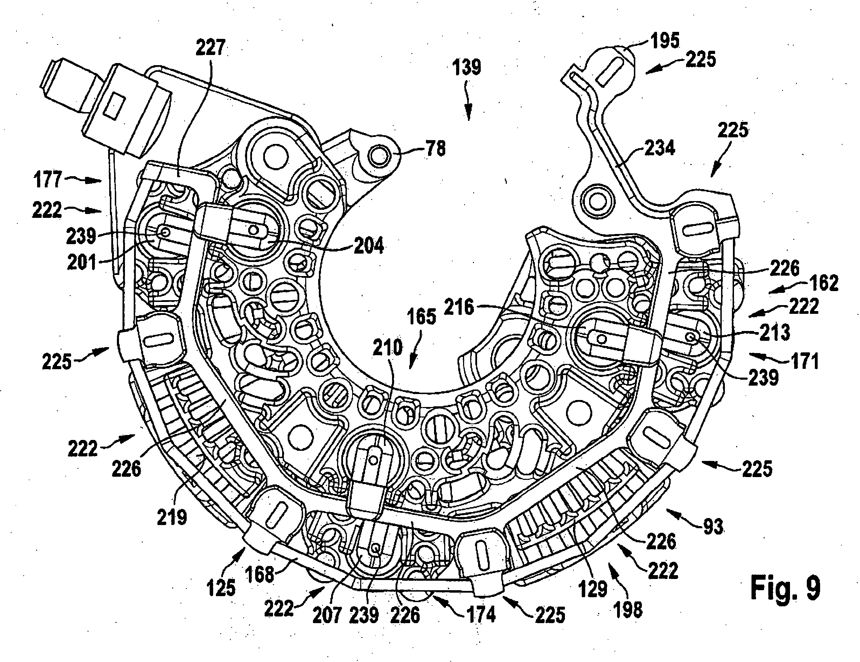

Figur 9 zeigt die zusammengebaute Kühleinrichtung 141 von der anderen, in Figur 8 nicht gezeigten Seite. Von dieser Seite sind Anschlusskontakte 201 und 204, Anschlusskontakte 207 und 210 und Anschlusskontakte 213 und 216 erkennbar, die je ein Paar 171, 174 und 177 aus je einem positiven Stromgleichrichter 147 (Plusdiode) und je einem negativen Stromgleichrichter 150 miteinander verschalten. Diese Verschaltung entspricht einer üblichen Brückengleichrichterschaltung. Die positiven Stromgleichrichter 147 (Plusdioden), Einpressdioden wie auch die negativen Stromgleichrichter 150 (Minusdioden), sind mit dem ersten Kühlkörper 53 elektrisch leitfähig verbunden, so dass über die Stromgleichrichter 150 am B+-Bolzen 153 im Betriebsfall (eingeschalteter Zustand, Erregerstrom, drehender Rotor 20) eine positive Spannung anliegt.

Der Löcher 123 aufweisende Kühlkörper 117 ist im Wesentlichen ringsegmertförmig, wobei sich an zumindest einer Umfangsstelle 126 ein Überhang 127 bzw. leiterartiges Kühlsegment 129 befindet, wobei die beiden Kühlkörper 53 und 117 durch- und zwischenströmbar mit Abstand übereinander geschichtet sind und das leiterartige Kühlsegment 129 des weiteren Kühlkörpers 117 über dem leiterartigen Kühlsegment 93 des ersten Kühlkörpers 53 angeordnet ist. Ein größter Außendurchmesser des Überhangs 127 bzw. Kühlsegments 129 ist kleiner als ein Außendurchmesser des Überhangs 92 Kühlsegments 93. Der Umfangsbogen 198 befindet sich in Bezug zur Drehachse 26 an der gleichen axialen Position wie ein Außenrand 219 and in Bezug zu Figur 9 über dem Überhang 92. Wie aus Figur 9 erkennbar ist, weist der Umfangsbogen 198 des Leiterabschnittes 168 mehrere Knickstellen 222 auf. Einige dieser Knickstellen 222 sind an einer gleichen Umfangsposition wie Anschlusskontakte 201, 207 und 213. Die Knickstellen 222 führen dazu, dass ein hier nicht näher bezeichneter Abstand zwischen einer Knickstelle 222 und einem Anschlusskontakt 201, 207 und 213 größer ist, als wenn an der Position der Knickstelle 222 ein einfacher Kreisbogen vorgesehen wäre. Ein an der Knickstelle 222 bestimmter Knickwinkel ist so angeordnet, dass sich der Knickwinkel auf der radialen Innenseite des Umfangsbogens befindet. Der zum Knickwinkel komplementäre Außenwinkel ist größer als der Knickwinkel. Der Umfangsbogen 198 erstreckt sich in Bezug zum Mittelpunkt (Drehachse 26) über ein Winkelmaß, dass größer ist als der Winkel, über den sich die Stromgleichrichter 147 und 150 insgesamt im Kühlkörper 53 und 117 erstrecken. Anders ausgedrückt, erstreckt sich Umfangsbogen 198 in Bezug zum Mittelpunkt (Drehachse 26) über ca. 225° des Umfangs. Der Umfangsbogen 198 ist an den Führungsstutzen 225 mittels einstückig angeformter Ösen 223 abgestützt.

In einer Seitenansicht lässt sich die Gleichrichtereinrichtung 139 wie folgt beschreiben: Ein Überhang 92 weist in Umfangsrichtung U rechts und links zunächst eine Aussparung 94 auf, in der ein Führungsstutzen 225 sitzt. Neben einem Überhang 127 in Umfangsrichtung U rechts und links befindet sich zunächst eine Aussparung 130, in der ein Führungsstutzen 225 sitzt. Ausgehend von dem Überhang 127 befindet sich jenseits der Aussparung 130 eine weitere Aussparung 131, in die Anschlusskontakte 239 (Diodenkopfdrähte) ragen.

Die Verschaltungseinheit 144 weist an im Beispiel nach Figur 8 und 9 insgesamt sechs Positionen Führungsstutzen 225 auf. Diese Führungsstutzen 225 haben die Aufgabe, mit ihren in Figur 9 zum Betrachter gerichteten trichterförmigen Enden einige Leiterenden der Ständerwicklung 18 aufzunehmen und gezielt zu den aus den Führungsstutzen austretenden und sich abgewinkelt darüber erstreckenden (U- bzw. schlaufenförmigen) Anschlusskontakten 180, 183, 86, 189, 192 und 195 zu führen, damit eine vorzugsweise maschinelle Kontaktierung zwischen den Leiterenden und den Anschlusskontakten 180, 183, 186, 189, 192 und 195 leicht möglich ist. Vier der rohrartigen Führungsstutzen 225 und je ein Anschlusskontakt 183, 186, 189 und 192 der Verschaltungseinheit 144 befinden sich zwischen einem leiterartigen Kühlsegment 93 und einer Aufnahme 66. Die beiden anderen Führungsstutzen 225, in Figur 8 an den Positionen "4-Uhr" und ca. "5-Uhr", sind außerhalb der Außenkontur des ersten Kühlkörpers 53. Der Führungsstutzen 225, welcher sich zwischen dem Lagerschild 13.2 und dem Regler 231 in Richtung der Drehachse 26 befindet, ist in Richtung der Drehachse 26 betrachtet, außerhalb der Außenkontur des ersten Kühlkörpers 53 angeordnet.

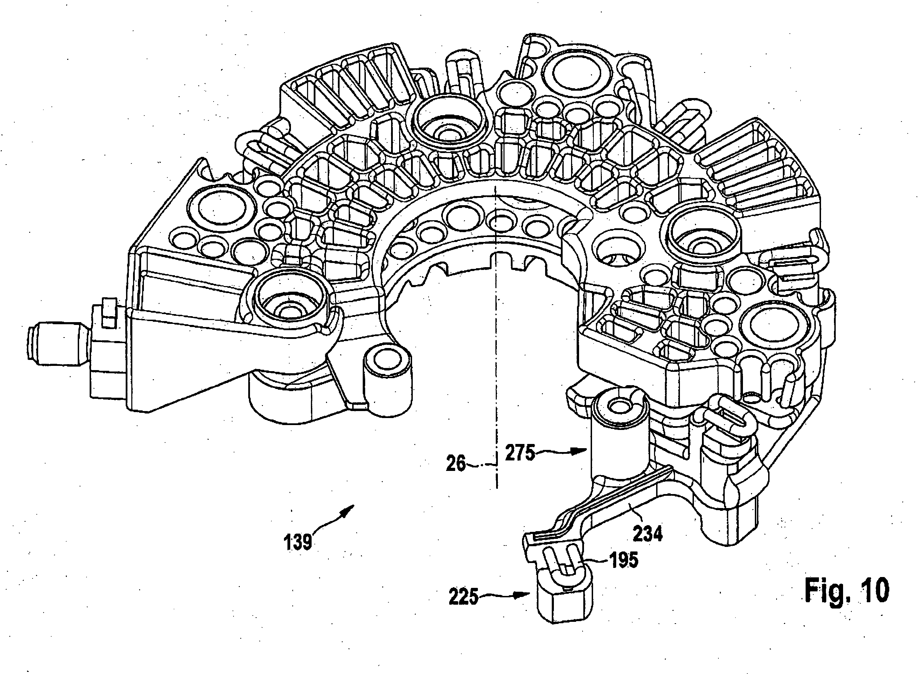

Während der Führungsstutzen 225 an der "4-Uhr"-Position von seiner Größe und Gestaltung her im Wesentlichen wie die anderen vier Führungsstutzen 225 gestaltet ist, weist der Führungsstutzen 225 an der "5-Uhr"-Positon eine Besonderheit auf. So weist dieser nachfolgend "kleine" Führungsstutzen 225 genannte Führungsstutzen 225 zwar auch einen Anschlusskontakt 195 auf. Der Führungsstutzen 225 selbst ist jedoch ein kleiner Führungsstutzen 225 und somit in Bezug zur Drehachse 26 kürzer als die anderen Führungsstutzen 225, siehe auch Figur 10. Die Führungsstutzen 225 sind durch Stege 226 miteinander einstückig verbunden. In dem Steg 226 zwischen dem Führungsstutzen 225 auf der "2-Uhr"-Position (Fig. 9) und dem Führungsstutzen 225 auf der "4-Uhr"-Position befindet sich der Leiterabschnitt 162. In dem Steg 226 zwischen der "4-Uhr"-Position und der "6-Uhr"-Position ist kein Leiterabschnitt eingebettet, jedoch wiederum in dem Steg 226 zwischen der "6-Uhr"- und der "7-Uhr"- Position. Ein weiterer Leiterabschnitt 162 ist zwischen dem Führungsstutzen 225 auf der "9-Uhr"-Position und dem Ende 227 der Verschaltungseinheit 144 eingebettet, welches dann in den Umfangsbogen 198 des Leiterabschnittes 168 übergeht und zum kleinen Führungsstutzen 225 führt. Die Leiterabschnitte sind - mit Ausnahme des Umfangsbogens 198 - jeweils im Kunststoffmaterial der Verschaltungseinheit 144 eingebettet.

Die Verschaltungseinheit 144 befindet sich größtenteils in einem nur wenig bis gar nicht mit Kühlluft umströmten Bereich (Strömungs-Totgebiet). Dieser Bereich ist im radial äußeren Bereich (Drehachse 26) unterhalb des ersten Kühlkörpers 53 (Pluskühlkörper). Jedenfalls gilt dies für die Stege 226 und den Umfangsbogen 198, die beide in Bezug zur radialen Erstreckung des ersten Kühlkörpers 53 (Pluskühlkörper) unter einer äußeren Hälfte seiner radialen Erstreckung angeordnet sind. "Unter" einer äußeren Hälfte bedeutet, däss sich die Stege 226 und der Umfangsbogen 198 zwischen dem Lagerschild und dem Kühlkörper 53 (Pluskühlkörper) befinden. Des Weiteren decken sich vorzugsweise der Umfangsbogen 198 und ein radial äußerer Rand der Aufnahmen 66, s. a. Figur 9.

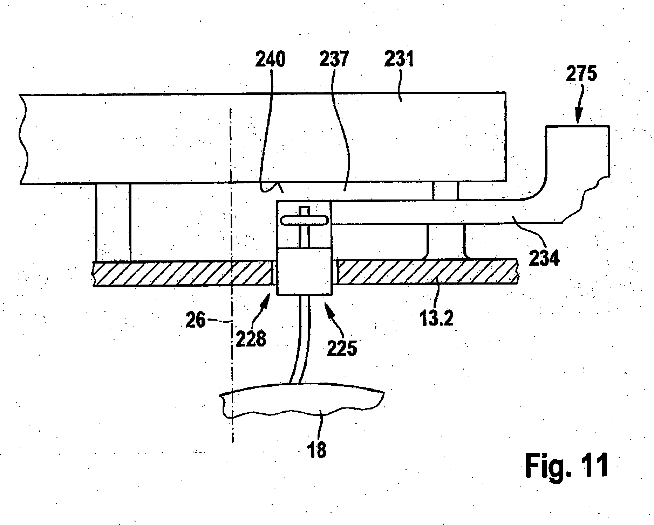

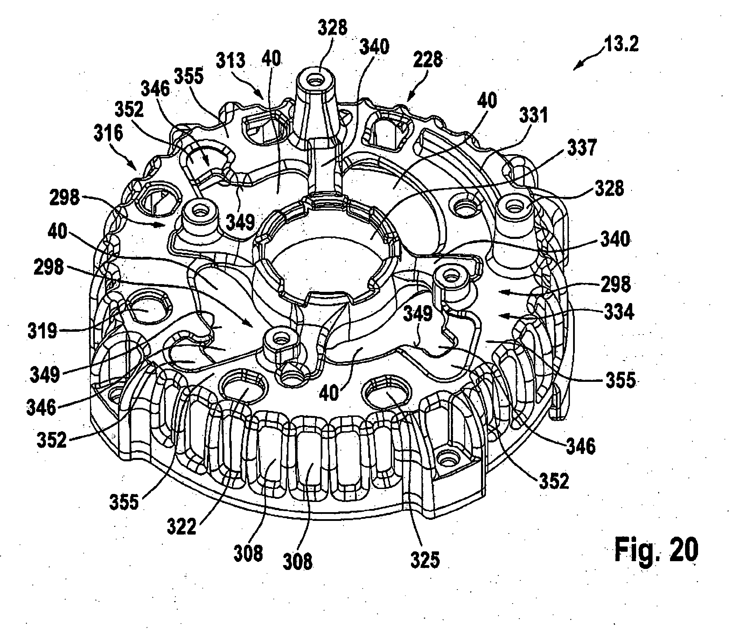

In Figur 11 ist erkennbar, welchen Zweck dies hat: Wie alle anderen Führungsstutzen 225 ist auch der kleine Führungsstutzen 225 in einer Öffnung 228 des Lagerschilds 13.2 angeordnet bzw. eingesteckt. Durch den kleinen Führungsstutzen 225 sind Leiterenden 228 der Ständerwicklung 18 eingesteckt, die an ihrem oberen Ende mit dem Anschlusskontakt 195 elektrisch leitfähig verbunden sind. An dieser Stelle liegt vorzugsweise eine Schweißverbindung oder auch eine Lötverbindung vor. Es ist ebenso auch möglich in einer alternativen Ausgestaltung hier eine Schraubverbindung vorzusehen. In dem dieser kleine Führungsstutzen 225 so kurz ausgeführt ist, ist es möglich, diesen Platz sparend in axialer Richtung (Drehachse 26) zwischen der Ständerwicklung 18 und einem Regler 231 anzuordnen. Der Regler 231 dient dazu, einen Erregerstrom zu erzeugen und mittels hier nicht dargestellten Bürsten über die bereits erwähnte Schleifringbaugruppe 49 die Erregerwicklung 51 mit Erregerstrom zu versorgen und dadurch den Rotor 20 elektromagnetisch zu erregen. Ein Arm 234, in welchem der Leiteräbschnitt 168 eingebettet ist und welcher körperlich die zwei Führungsstutzen 225 miteinander verbindet, welche sich außerhalb der Außenkontur des ersten Kühlkörpers 53 befinden, reicht ebenfalls unter den Regler 231 und damit in einen Zwischenraum 237, der sich zwischen einer zum Lagerschild 13.2 in axialer Richtung (Drehachse 26) gerichteten Unterseite 240 des Reglers 231 und dem Lagerschild 13.2 selbst befindet. Der Arm 234, der den kurzen Führungsstutzen 225 mit den anderen Führungsstutzen 225 einstückig verbindet umgreift dabei einen Befestigungsstutzen 328 von radial innen, Figur 20.

Es ist dem nach eine elektrische Maschine 10, insbesondere Wechselstromgenerator, mit einem Rotor 20 offenbart, der eine Drehachse 26 hat, mit einem Stator 16 aus einem Ständereisen 17 und einer darin eingelegten Ständerwicklung 18 die Leiterenden 228 aufweist, die mit einer Gleichrichtereinrichtung 139 verschaltet sind, mit einem Regler 231 zur Regelung eines Erregerstroms und einer Kühleinrichtung in der Gleichrichtereinrichtung 139, mit einem ersten Kühlkörper 53, der zumindest eine Aufnahme 66 aufweist, an der ein Stromgleichrichter 147 aufgenommen ist, mit einem zweiten Kühlkörper 117, wobei der Kühlkörper 117 zumindest eine Aufnahme 120 aufweist, an der ein Stromgleichrichter 150 aufgenommen ist, mit einer Verschaltungseinheit 144, die die Stromgleichrichter 147, 150 zu einer Brückenschaltung verschaltet, wobei die Verschaltungseinheit 144 mehrere einstückig angeformte Führungsstutzen 225 aufweist, in denen Leiterenden 228 der Ständerwicklung 18 aufgenommen sind, wobei ein Führungsstutzen 225 zwischen dem Lagerschild 13.2 und dem Regler 231 in Richtung der Drehachse 26 angeordnet ist.

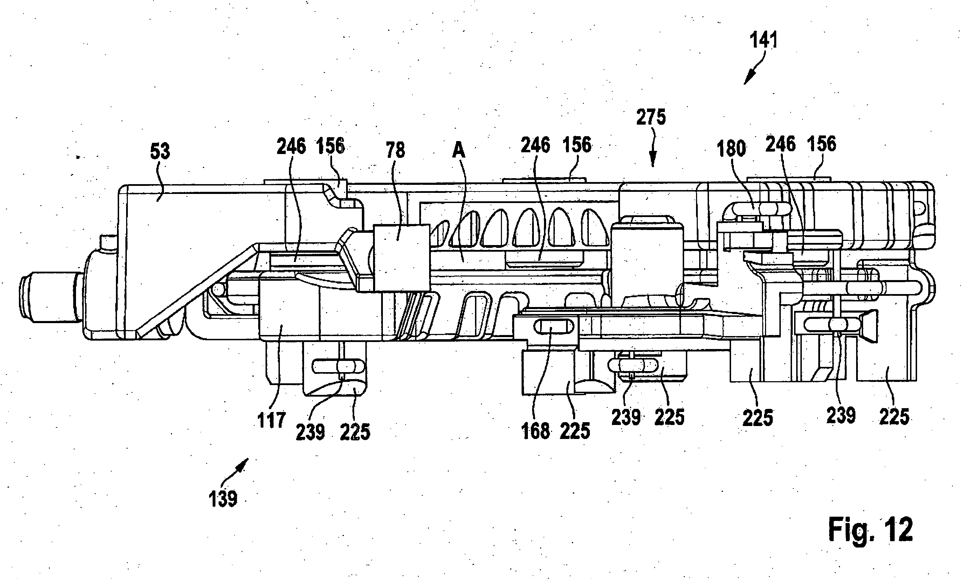

Figur 12 zeigt eine Seitenansicht auf die Kühleinrichtung 141. Distanzstücke 246 zwischen dem ersten Kühlkörper 53 und dem weiteren Kühlkörper 117 sichern einen Abstand A zwischen den beiden Kühlkörpern 53 und 117. Die Führungsstutzen 225 werden in die Öffnungen 228 des Lagerschilds 13.2 eingesteckt, so dass die Stege 226 auf dem Lagerschild 13.2 aufliegen. Der Kühlkörper 117 ist mit einem Teil seines Körpers zwischen je zwei direkt benachbarten Führungsstutzen 225 angeordnet; darüber hinaus ist ein Teil des Kühlkörpers 117 von den Stegen 226 umgeben. In Figur 12 sind einige wenige Anschlusskontakte 239 (Diodenkopfdrähte) der Stromgleichrichter 147 und 150 zu erkennen.

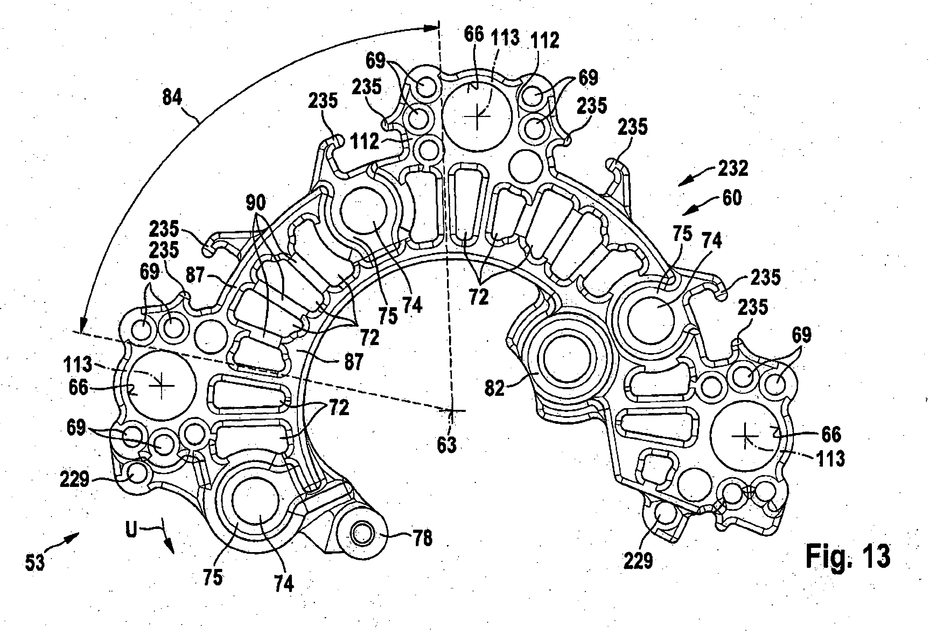

In Figur 13 ist in einem weiteren Ausführungsbeispiel ein erster Kühlkörper 53 abgebildet. Dieser Kühlkörper 53 weist einen bogenförmigen Körperbereich 60 auf. Dieser bogenförmigen Körperbereich 60 weist eine zentrale Mitte 63 auf. Diese zentrale Mitte 63 deckt sich im an das Gehäuse 13.2 montierten Zustand mit der Drehachse 26. Der Kühlkörper 53 hat drei Aufnahmen 66, die dazu dienen, jeweils einen Stromgleichrichter aufzunehmen. Der Stromgleichrichter ist hier beispielsweise eine Plusdiode. Die Aufnahmen 66 haben hier die Gestalt eines Loches, in die später beispielsweise sogenannte Einpressdioden (Plusdioden) eingedrückt werden. Statt eines Loches kann zur Befestigung der Diode alternativ beispielsweise auch eine Vertiefung in der Oberfläche des ersten Kühlkörpers 53 vorgesehen sein, vgl. auch die Beschreibung zum vorgenannten Ausführungsbeispiel. Darüber hinaus weist der Kühlkörper 53 etliche Öffnungen auf, die zur Durchströmung des im Betrieb heißen Kühlkörpers 53 mit Kühlmittel dienen. Um eine Aufnahme 66 herum, sind bogenartig aneinandergereiht erste Öffnungen 69 angeordnet. Diese ersten Öffnungen 69 sind in Umfangsrichtung U beiderseits einer Aufnahme 66 angeordnet. Zwischen den Aufnahmen 66 und der zentralen Mitte 63 ist in Richtung zur zentralen Mitte 63 zumindest eine länglich geformte zweite Öffnung 72 angeordnet, wobei die zweite Öffnung 72 mit ihrer länglichen Form zumindest im Wesentlichen auf die zentrale Mitte 63 ausgerichtet ist. In weiterer Näherung kann auch festgestellt werden, dass zwischen den Aufnahmen 66 mit den ersten Öffnungen 69 und der zentralen Mitte 63 in Richtung zur zentralen Mitte 63 mehrere länglich geformte zweite Öffnungen 72 angeordnet sind, wobei die zweiten Öffnungen 72 mit ihrer länglichen Form zumindest im Wesentlichen auf die zentrale Mitte 63 ausgerichtet sind. Zwei Öffnungen 229, sozusagen in zweiter Reihe um die jeweilige Aufnahme 66, dienen zur Befestigung des Kühlkörpers 53 an der Verschaltungseinheit 144, in dem ein optionaler vorzugsweise klemmender Stift (Presspassung zwischen Stift und Öffnung 229) oder Schnapphaken der Verschaltungseinheit 144 in die jeweilige Öffnung 229 eingreift.

In dem Körperbereich 60 sind weiters drei zylindrische mit je einem Loch 74 versehene Senkbereiche 75 vorgesehen. Dort ist die Materialstärke des Kühlkörpers 53 auf ca. 40% dessen reduziert, die bei den Aufnahmen 66 vorgesehen ist. Diese Senkbereiche 75 dienen bei der Montage zur Befestigung der Gleichrichtereinrichtung 139 am Lagerschild 13.2. Eine Gewindehülse 78 dient zur Befestigung und Kontaktherstellung mit einem weiteren Bauteil der Gleichrichtereinrichtung 139 und ist wie bereits beim ersten Ausführungsbeispiel einstückig an den Kühlkörper 53 angeformt. Ein Einsetzdom 82 dient zur späteren Aufnahme und Befestigung eines sogenannten B+-Bolzens (B-Plus-Bolzen), an dem ein Ladekabel befestigt wird, um einer Fahrzeugbatterie elektrischen Strom zuführen zu können.

Wie bereits erwähnt, sind mehrere Aufnahmen 66 vorhanden, die am Umfang 81 des Kühlkörpers 53 voneinander beabstandet angeordnet sind.

Aus Figur 13 ist zu entnehmen, dass in einem Segment 84 zwischen zwei Aufnahmen 66 mehrere länglich geformte zweite Öffnungen 72 angeordnet sind, die sich zwischen zwei bogenförmig erstreckenden Holmen 87 erstrecken. Die zweiten Öffnungen 72 zwischen zwei bogenförmigen Holmen 87 sind durch Stege 90 getrennt. Die Stege 90 erstrecken sich vorzugsweise radial. Die beiden Holme 87 verlaufen zumindest in etwa kreisbogenförmig.

Um die Aufnahmen 66 herum sind die Öffnungen 69 angeordnet. Zur Verbesserung des Zugriffs zu nachfolgend gezeigten Anschlusskontakten, die in der Gleichrichtereinrichtung 139 neben den Öffnungen 69 positioniert werden, ist vorgesehen, Umrandungen 112 der Öffnungen 69 auf der Seite der Öffnungen 69, die einem Zentrum 113 einer Aufnahme 66 abgewandt sind, in ihrer Materialstärke in Achsrichtung (Drehachse 26) weniger stark auszuführen, als dies zwischen den Aufnahmen 66 und den Öffnungen 69 der Fall ist.

Am Außenumfang 232 des Kühlkörpers 53 befinden sich beispielhaft acht Hakenelemente 235. Je zwei paarweise angeordnete Hakenelemente 235 stehen sich so gegenüber, dass beide zusammen mit dem Außenumfang 232 einen Hinterschnitt bilden, auf den später nochmals eingegangen werden wird.

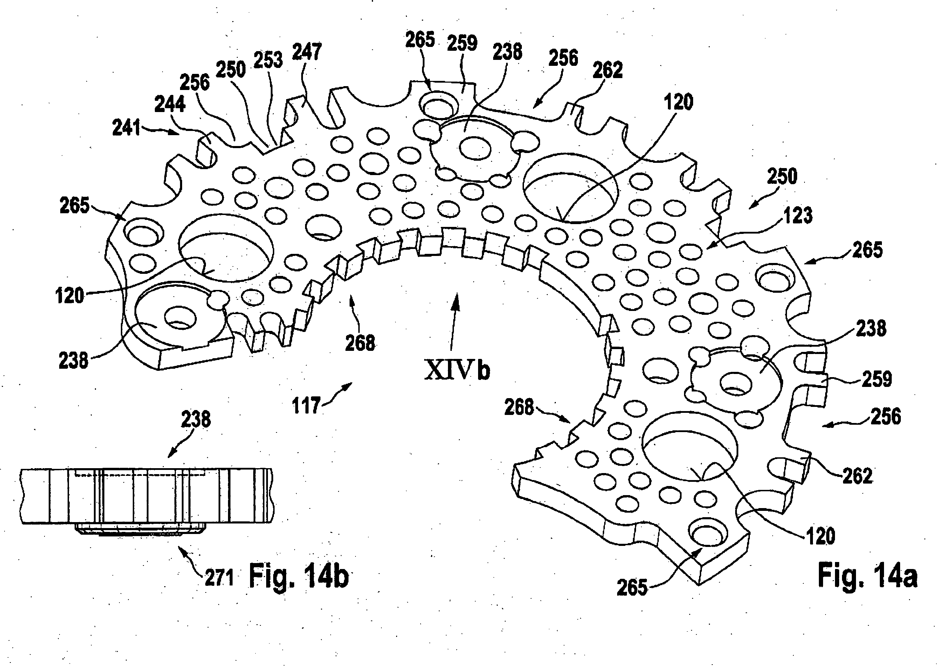

In Figur 14a ist eine räumliche Ansicht auf einen weiteren Kühlkörper 117 des zweiten Ausführungsbeispiels dargestellt. Der Kühlkörper 117 hat drei Aufnahmen 120, die dazu dienen, jeweils einen Stromgleichrichter aufzunehmen. Der Stromgleichrichter ist hier beispielsweise eine Minusdiode. Die Aufnahmen 120 haben hier die Gestalt eines Loches, in die später beispielsweise sogenannte Einpressdioden (Minusdioden) eingedrückt werden. Alternativ kann beispielsweise auch eine Vertiefung in der Oberfläche des weiteren Kühlkörpers 120 vorgesehen sein, siehe auch Erläuterungen zuvor hinsichtlich verschiedener Befestigungsmöglichkeiten für Dioden. Darüber hinaus weist der Kühlkörper 120 etliche Öffnungen 123 auf, die zur Durchströmung des im Betrieb heißen Kühlkörpers 120 mit Kühlmittel dienen. Des Weiteren sind auf der Oberfläche des Kühlkörpers 117 drei zylindrische Vertiefungen 238 eingebracht, die dazu dienen, zylindrische Distanzstücke zu zentrieren. Am Außenumfang 241 des Kühlkörpers 117 sind verschiedene Rippen dargestellt. Die Rippen 244 und 247 sind einander direkt benachbarte Rippen, die auch als sehr flache Kühlrippen des geblechten - bspw. 4mm starken - Kühlkörpers 117 bezeichnet werden können. Zwischen diesen beiden Rippen 244 und 247 befindet sich eine gestufte Nische 250. Diese gestufte Nische 250 besteht aus einer kleinen Teilnische 253, die einem hier nicht dargestellten Zentrum des Kühlkörpers 117 näher ist als eine größere, sich nach radial weiter außen öffnende Außennische 256, die auch Teil der Nische 250 ist. Eine derartige gestufte Nische 250 findet sich am Außenumfang 241 insgesamt zwei Mal. Eine weitere spezielle Nische 256 - ebenfalls begrenzt durch Rippen 259 und 262 - befindet sich ebenfalls am Außenumfang 241. Beispielhaft vier Mal am Außenumfang 241 des Kühlkörpers 117 und damit direkt oberhalb der Stege eines in diesem Beispiel noch nicht gezeigten Verschaltungsmittels sind runde Löcher 265 zu erkennen, die auf der Seite, auf der sich die Vertiefungen 238 befinden, gesenkt sind. Am Innenumfang des Kühlkörpers 117 sind Rippen 268 verteilt angeordnet.

In Figur 14b, eine Ansicht auf die Rippen 268, ist eine Ansicht auf eine Vertiefung 238 zu erkennen. Der Vertiefung 238 steht ein im Durchmesser etwas größeres Podest 271 gegenüber.

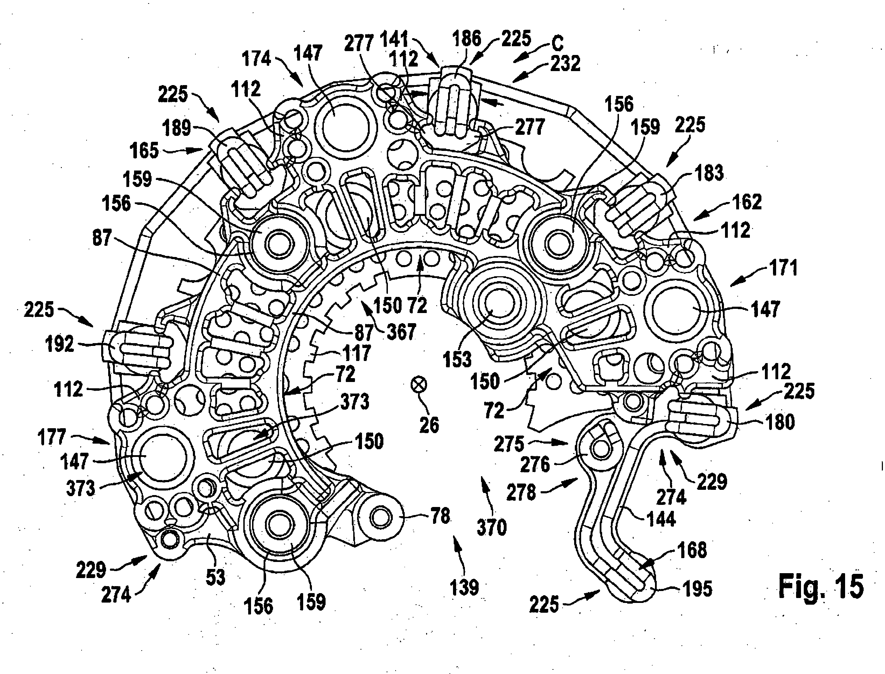

Figur 15 zeigt eine Draufsicht auf die Gleichrichtereinrichtung 139 bzw. zusammengebaute Kühleinrichtung 141 aus erstem Kühlkörper 53 (Pluskühlkörper), zweitem Kühlkörper 117 (Minuskühlkörper), Verschaltungseinheit 144, positiven Stromgleichrichtern 147 (Plusdioden), negativen Stromgleichrichtern 150 (Minusdioden), B+-Bolzen 153, Isolationshülsen 156 und Nieten 159 (Rohrnieten). Des Weiteren sind hier nicht erkennbare Distanzstücke verwendet. Die Ansicht auf die Kühleinrichtung 141 entspricht in Bezug zur Figur 1 bei abgenommener Schutzkappe 47 der Ansicht von rechts in Richtung der Drehachse 26.

Die Verschaltungseinheit 144 weist in bekannter Weise mehrere Leiterabschnitte 162, 165 und 168 auf, die dazu dienen je ein Paar 171,174 und 177 aus je einem positiven Stromgleichrichter 147 (Plusdiode) und je einem negativen Stromgleichrichter 150 miteinander so zu verschalten, dass die an den Anschlusskontakten 180, 183, 186, 189, 192 und 195 (Anschlussbogen) angeschlossenen Ständerwicklungen und die von ihnen gelieferte Wechselspannung gleichgerichtet wird. Die Anschlusskontakte 180 und 183 sind mit dem Paar 171, die Anschlusskontakte 186 und 189 sind mit dem Paar 174 und die Anschlusskontakte 192 und 195 (über den Umfangsbogen 198) sind mit dem Paar 177 verbunden.

In Figur 15 ist auch zu erkennen, dass - wie bereits beim ersten Ausführungsbeispiel die länglichen Öffnungen 72 axial (Drehachse 26) über den negativen Stromgleichrichtern 150 (Minusdioden) angeordnet sind. Die negativen Stromgleichrichter 150 (Minusdioden) sind auch hier - bezogen auf die Drehachse 26 als Zentrum - auf einem kleineren Radius als die positiven Stromgleichrichter 147 (Plusdioden). Der durch den inneren der beiden Holme 87 begrenzte Teil des Kühlkörpers 53 ist auf einem größeren Radius angeordnet als der Bereich des Kühlkörpers 117, der an dieser Umfangsstelle angeordnet ist.

Die Gleichrichteranordnung wird an den Anschlusskontakten 180, 183, 186, 189, 192 und 195 (Anschlussbogen) an die Ständerwicklungen angeschlossen. Hierzu ist wie in Figur 11 gezeigt vorgesehen, dass Leiterenden 228 (Ständeranschlussdrähte) durch die Führungsstutzen 225 und die schlaufenförmigen Anschlusskontakte 180, 183, 186, 189, 192 und 195 hindurchgeschoben werden. Die eigentliche Befestigung und Kontaktgabe zwischen den Anschlusskontakten 180, 183, 186, 189, 192 und 195 und den Leiterenden 228 erfolgt dadurch, dass die Anschlusskontakte 180, 183, 186, 189, 192 und damit die seitlichen Drahtbereiche - siehe Beispiel und Kontaktstelle C - des Leiterabschnitts 165 oberhalb des Führungsstutzens 225 in Richtung der dort eingezeichneten Pfeile gedrückt und nach Kontakt mit den Leiterenden 228 miteinander verschweißt werden. Alternativ ist hier bspw. auch eine Kontaktgabe durch Löten möglich. Damit die seitlichen Drahtbereiche des Leiterabschnitts 165 überhaupt aufeinander zubewegt werden können, ist beispielsweise eine entsprechend ausgeformte (Schweiß-)Zange erfordierlich. Deren Zangenteile müssen zwischen einen seitlichen Drahtbereich eines Anschlusskontakts und die Umrandungen 112 der Öffnungen 69 auf der Seite der Öffnungen 69, die einem Zentrum 113 einer Aufnahme 66 abgewandt sind, eingebracht werden. Damit dies möglich ist, ist die Materialstärke der Umrandung 112 in Achsrichtung (Drehachse 26), weniger stark ausgeführt, als dies zwischen den Aufnahmen 66 und den Öffnungen 69 der Fall ist. Der Kühlkörper 53 ist dort weniger dick. In Figur 15 sind die bereits zu Figur 13 erwähnten Stifte 274 erkennbar, wie sie durch die Öffnung 229 hindurchragen und in der Öffnung 229 den Kühlkörper 53 mit der Verschaltungseinheit 144 klemmend verbinden. Von einem dem kurzen Führungsstutzen 225 direkt zugeordneten Anschlusskontakt 195 geht einstückig ein Leiter in Gestalt eines Umfangsbogens 198 aus, der abschnittsweise in Richtung der Drehachse 26 unter einem Außenrand einer Aufnahme 66 angeordnet ist. Der Umfangsbogen 198 ist zwischen dem Lagerschild 13.2 und dem Kühlkörper 53 angeordnet.

Ein Anschraubstutzen 275 trägt eine Kontaktschleife 276, die unter sich eine in den Kunststoff des Anschraubstutzens eingebettete, umspritzte Schraubenmutter 278 abdeckt. Die Kontaktschleife 276 dient als sogenannte "Klemme V". Der Anschraubstutzen 275 ist in allen Ausführungsbeispielen gleich aufgebaut.

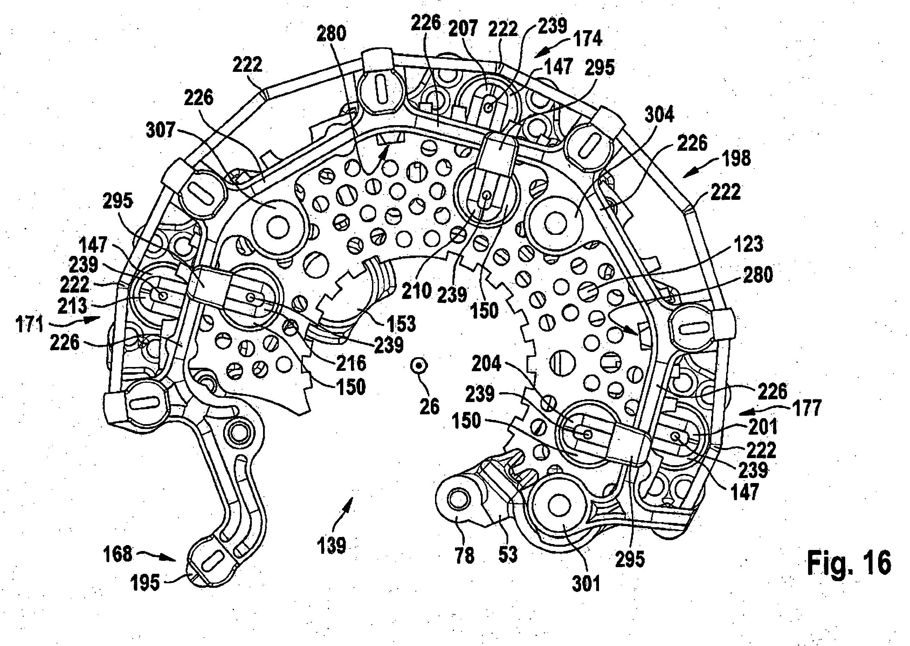

Figur 16 zeigt die zusammengebaute Kühleinrichtung 141 von der anderen, in Figur 15 nicht gezeigten Seite. Von dieser Seite sind Anschlusskontakte 201 und 204, Anschlusskontakte 207 und 210 und Anschlusskontakte 213 und 216 erkennbar, die je ein Paar 171, 174 und 177 aus je einem positiven Stromgleichrichter 147 (Plusdiode) und je einem negativen Stromgleichrichter 150 miteinander verschalten. Diese Verschaltung entspricht einer üblichen Brückengleichrichterschaltung. Die positiven Stromgleichrichter 147 (Plusdioden), Einpressdioden wie auch die negativen Stromgleichrichter 150 (Minusdioden), sind mit dem ersten Kühlkörper 53 elektrisch leitfähig verbunden, so dass über die Stromgleichrichter 150 am B+-Bolzen 153 im Betriebsfall (eingeschalteter Zustand, Erregerstrom, drehender Rotor 20) eine positive Spannung anliegt

Der Löcher 123 aufweisende Kühlkörper 117 ist im Wesentlichen ringsegmentförmig, wobei die beiden Kühlkörper 53 und 117 durch- und zwischenströmbar mit Abstand übereinander geschichtet sind. Wie auch aus Figur 9 erkennbar ist, weist der Umfangsbogen 198 des Leiterabschnittes 168 mehrere Knickstellen 222 auf. Einige dieser Knickstellen 222 sind an einer gleichen Umfangsposition wie Anschlusskontakte 201, 207 und 213. Die Knickstellen 222 führen dazu, dass ein hier nicht näher bezeichneter Abstand zwischen einer Knickstelle 222 und einem Anschlusskontakt 201, 207 und 213 größer ist, als wenn an der Position der Knickstelle 222 ein einfacher Kreisbogen vorgesehen wäre. Dies verbessert beispielsweise die Zugänglichkeit zu den Anschlusskontakten 201, 207 und 213, die mit den Anschlusskontakten der Stromgleichrichter 147 (Diodenkopfdrähte) verbunden werden müssen.

Die Verschaltungseinheit 144 weist an im Beispiel nach Figur 15 und 16 insgesamt sechs Positionen Führungsstutzen 225 auf. Diese Führungsstutzen 225 haben die bereits genannte Aufgabe, mit ihren in Figur 16 zum Betrachter gerichteten trichterförmigen Enden einige Leiterenden der Ständerwicklung 18 aufzunehmen und gezielt zu den Anschlusskontakten 180, 183, 186, 189, 192 und 195 zu führen, damit eine vorzugsweise maschinelle Kontaktierung zwischen den Leiterenden und den Anschlusskontakten 180, 183, 186, 89, 192 und 195 leicht möglich ist. Während der Führungsstutzen 225 an der "7-Uhr"-Position von seiner Größe und Gestaltung her im Wesentlichen wie die anderen vier Führungsstutzen 225 ("9Uhr"-, "10Uhr"-, "12Uhr"- und "2Uhr"-Position, Positionsangaben in Bezug zu Figur 16) gestaltet ist, weist der Führungsstutzen 225 an der "6-Uhr"-Positon eine Besonderheit auf. So weist dieser nachfolgend "kleine" Führungsstutzen 225 genannte Führungsstutzen 225 zwar auch einen Anschlusskontakt 195 auf. Der Führungsstutzen 225 selbst ist jedoch ein kleiner Führungsstutzen 225 und somit in Bezug zur Drehachse 26 kürzer als die anderen Führungsstutzen 225 (siehe auch Figur 10). Der Führungsstutzen 225 zwischen dem Lagerschild 13.2 und dem Regler 231 ist in Richtung der in dem Führungsstutzen 225 angeordneten Leiterenden 228 kürzer als andere Führungsstutzen 225. Die Führungsstutzen 225 sind durch Stege 226 miteinander einstückig verbunden. In dem Steg 226 zwischen dem Führungsstutzen 225 auf der "6-Uhr"-Position und dem Führungsstutzen 225 auf der "7-Uhr"-Position befindet sich der Leiterabschnitt 162. In dem Steg 226 zwischen der "12-Uhr"-Position und der "2-Uhr"-Position ist kein Leiterabschnitt eingebettet, jedoch wiederum in dem Steg 226 zwischen der "12-Uhr"-und der "10Uhr"-Position. Ein weiterer Leiterabschnitt 162 ist zwischen dem Führungsstutzen 225 auf der "2-Uhr"-Position und dem Ende 227 der Verschaltungseinheit 144 eingebettet, welches dann in den Umfangsbogen 198 des Leiterabschnittes 168 übergeht und über den Umfang zu dem "kleine" Führungsstutzen 225 geführt ist. In Figur 16 sind die Anschlusskontakte 239 (Diodenkopfdrähte) der Stromgleichrichter 147 und 150 zu erkennen.

In Figur 15 wird die Bedeutung der bereits erwähnten Hakenelemente 235 klar: Die am Außenumfang 232 des Kühlkörpers 53 befindlichen acht Hakenelemente 235 führen zu einer eindeutigen Lagezuordnung zwischen dem Kühlkörper 53 und den aufgenommenen Stromgleichrichtern 147. Dies ermöglicht eine zuverlässig genaue Positionierung der Anschlusskontakte 239 (Diodenkopfdrähte) der positiven Stromgleichrichter 147 zu den Anschlusskontakten 201, 207 und 213 der Verschaltungseinheit 144. Je zwei paarweise angeordnete Hakenelemente 235 stehen sich so gegenüber, dass beide zusammen mit dem Außenumfang 232 einen Hinterschnitt bilden. Zwei einander gegenüberstehende Hakenelemente 235 hintergreifen zwei am Führungsstutzen 225 angeformte Hinterschnitte 277, die sich in der Draufsicht nach Figur 15 beiderseits je eines Anschlusskontakts 183, 186, 189, 192 und 195 befinden. In Bezug zur Drehachse 26 sind die Hinterschnitte 277 zumindest teilweise an der gleichen axialen Position wie die Führungsstutzen 225.

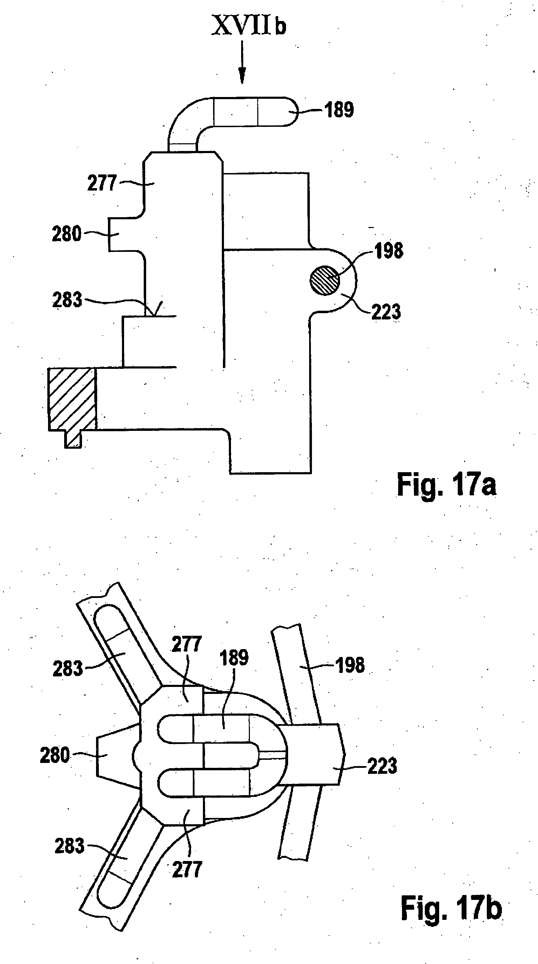

Zumindest ein Teil der Führungsstutzen 225 bzw. deren nächste jeweilige Umgebung hat neben der Aufgabe, die Anschlusskontakte 180, 183, 186, 189, 192 und 195 zu halten, weitere Funktionen. So ist einerseits der Kühlkörper 117 ggü. der Verschaltungseinheit 144 zu zentrieren und in Umfangsrichtung an der richtigen Position zu halten bzw. zu greifen. Des Weiteren ist in Achsrichtung (Drehachse 26) eine korrekte Lage des Kühlkörpers 117 zur Verschaltungseinheit 144 sicherzustellen. Dadurch wird es ermöglicht, einerseits die sich bei diesem Montageschritt bereits in den Aufnahmen 66 befindlichen Stromgleichrichter 150 (Minusdioden) an die richtige Position zu bringen, d. h. den Anschlusskontakten 204, 210 und 216 der Verschaltungseinheit 144 lagerichtig zuzuführen. Dies wird dadurch erreicht, dass an einer radialen Innenseite der Führungsstutzen 225, siehe auch Figur 17a und 17b, ein Zentrierabsatz 280 an die Führungsstutzen 225 angeformt ist. Dieser Zentrierabsatz 280 oder Zentrierstummel ragt beim Montieren des Kühlkörpers 117 auf die Verschaltungseinheit 144 in die gestufte Nische 250 und ganz besonders in die kleine Teilnische 253 hinein, siehe auch Figur 16. Diese Zentrierung wirkt bevor die Anschlusskontakte 239 (Diodenkopfdrähte) der Stromgleichrichter 150 (Minusdioden) in die Anschlusskontakte 204, 210 und 216 der Verschaltungseinheit 144 lagerichtig zugeführt sind. Vorzugsweise wirkt die Zentrierung durch den Zentrierabsatz 280 oder Zentrierstummel auch dann noch, wenn der Kühlkörper 117 seine Endlage auf den Podesten 283 eingenommen hat, muss es aber nicht mehr, da dann üblicherweise Diodenkopfdrähte bereits in die entsprechenden Anschlusskontakte eingefädelt sind. Die Rippen 244 und 247 sind in dieser Endposition rechts bzw. links von einem Führungsstutzen 225 angeordnet und führen eine lagerichtige Zuordnung des Kühlkörpers 117 zum Führungsstutzen 225 in Umfangsrichtung herbei. Optionale Stifte und/oder Schnapphaken auf der Verschaltungseinheit 144 bzw. den Stegen 226 sind auf den Kühlkörper 117 gerichtet und greifen zusätzlich in Öffnungen ein, um den Kühlkörper 117 zumindest reibschlüssig und/oder formschlüssig an der Verschaltungseinheit 144 zu halten.

Eine Baueinheit 284 aus dem Kühlkörper 53, im Beispiel drei Isolationshülsen 156, drei Distanzstücken 246 und drei Nieten 159 (Rohrnieten) mitsamt im Beispiel drei positiven Stromgleichrichtern 147 (Plusdioden) und dem B+-Bolzen 153 wird vormontiert. Dabei werden zunächst an den Aufnahmen 66 die positiven Stromgleichrichter 147 (Plusdioden) zur Aufnahme gebracht (Einpressdioden werden in die als zylindrische Löcher gestalteten Aufnahmen 66 eingepresst). Die Anschlusskontakte 239 (Diodenkopfdrähte) ragen damit durch die Löcher 74. Vorzugsweise danach werden die drei Distanzstücke 246 auf die Seite des Kühlkörpers 53 gelegt, auf der die Anschlusskontakte 239 (Diodenkopfdrähte) zu erkennen bzw. zu kontaktieren sind. Die gestuften Isolationshülsen 156 werden von der anderen Seite (Oberseite) in die Löcher 74 gesteckt und anschließend werden je ein Distanzstück 246, eine Isolationshülse 156 und eine Niete 159 (Rohrniete) an bzw. in einem Loch 74 miteinander befestigt. Ein Bund 286 der Niete 159 liegt dann an einer Stufe 289 der Isolationshülse 156 bzw. an einer Stirnfläche 292 eines Distanzstücks 246 an. Diese Baueinheit 284 wird anschließend auf den Kühlkörper 117 aufgesetzt, so dass der Bund 286 der Niete 159 in einer zylindrischen Vertiefung 238 des Kühlkörpers 117 zur Anlage kommt. Die Hakenelementen 235 umgreifen dabei in der beschriebenen Weise jeweils die am Führungsstutzen 225 angeformten Hinterschnitte 277. Gleichzeitig werden die Anschlusskontakte 239 (Diodenkopfdrähte) der positiven Stromgleichrichter 147 zu den Anschlusskontakten 201, 207 und 213 der Verschaltungseinheit 144 geführt und mit diesen verbunden.

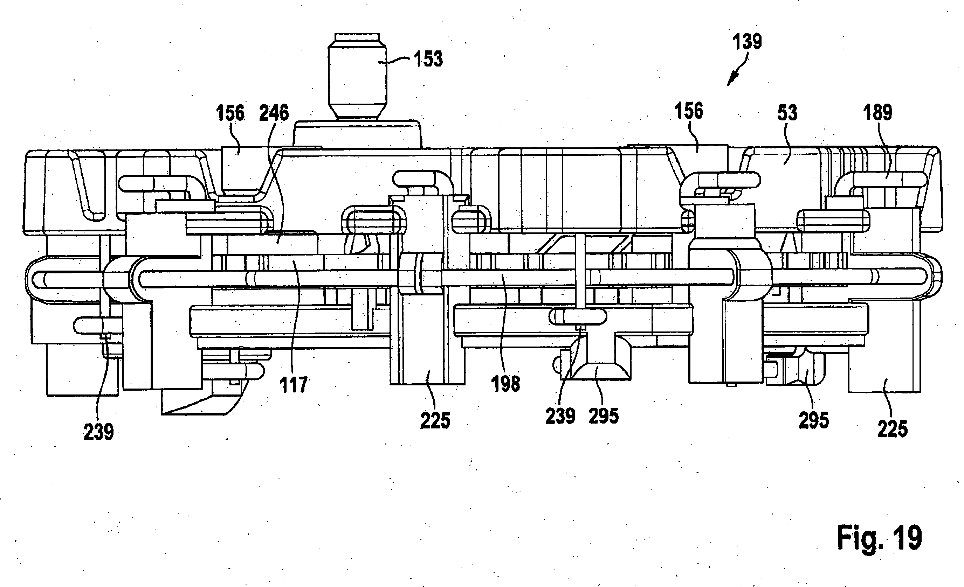

Figur 19 zeigt in einer Seitenansicht (senkrecht zur Drehachse 26) den Aufbau der Kühleinrichtung bzw. des Gleichrichters. In dieser Seitenansicht sind bei der Verschaltungseinheit 144 von den Stegen 226 ausgehend und nach unten ragend, das heißt an der vom Kühlkörper 117 abgewandten Seite vom Kühlkörper 117 wegragend, Podeste 295 zu sehen, die auch in der Unteransicht von Figur 16 erkennbar sind. Während die Anschlusskontakte 201, 207 und 213 sich nach radial außen erstrecken und in der Ebene der Stege 226 aus diesen austreten, ist in den Stegen 226 der Draht in Achsrichtung (Drehrichtung 26) und iri die vom Kühlkörper 53 wegweisenden Richtung nach "unten" umgebogen, um sich nach einer gewissen Strecke nach radial innen und aus den Podesten 295 austretend zu erstrecken.

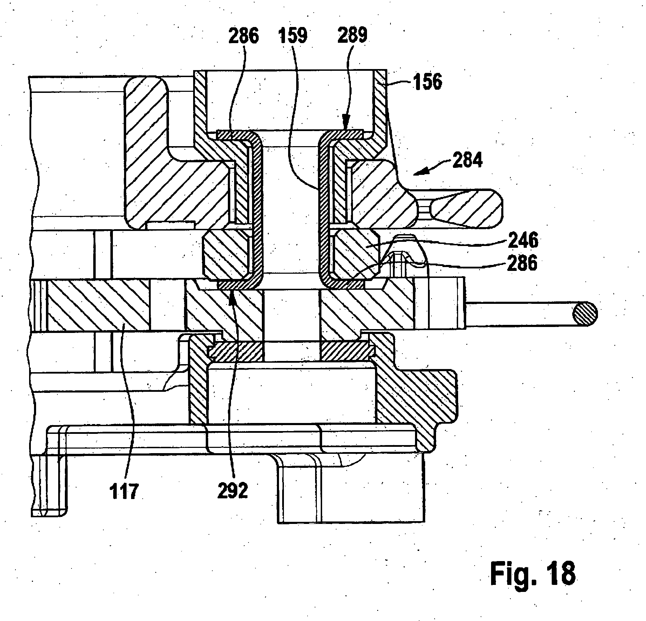

In Figur 20 ist in räumlicher Darstellung das Lagerschild 13.2 dargestellt. Dieses Lagerschild 13.2 zeigt drei Befestigungsstutzen 298 (Schraubstutzen mit Innengewinde), die dazu dienen, die Gleichrichtereinrichtung 139 zur Befestigung am Lagerschild 13.2 aufzunehmen. Dazu werden die in Figur 16 dargestellten runden, zentral gelochten Auflageflächen (Einlegeteile aus Metall, siehe auch Figur 18) 301, 304 und 307 auf je einen Befestigungsstutzen 298 aufgelegt. Dabei wird die Auflagefläche 301, welche der Gewindehülse 78 am nächsten gelegen ist, auf den Befestigungsstutzen 298 gesetzt, der in der Figur 20 rechts abgebildet ist. Die Auflagefläche 304, welche zwischen den beiden anderen Auflageflächen 301 und 307 angeordnet ist, wird auf den mittleren der drei Befestigungsstutzen 298 gesetzt. Am Außenumfang des Lagerschilds 13.2 befinden sich verteilt etliche schlitzförmige Luftaustrittsöffnungen 308

Die in Figur 15 und 16 dargestellten Führungsstutzen 225 werden mit Bezug zu Figur 16 wie folgt in Öffnungen 228, 313, 316, 319, 322 und 325 eingesetzt: Wie bereits zu Figur 11 beschrieben, wird der kleine Führungsstutzen 225 in die Öffnung 228 eingesetzt, die axial (Drehachse 26) unterhalb des Reglers angeordnet ist. Diese Öffnung ist zwischen einem Befestigungsstutzen 328 (Schraubstutzen mit Innengewinde) und einem Damm 331 im Stirnbereich 334 des Lagerschilds 13.2 eingebracht. Durch den Befestigungsstutzen 328 ist der Regler 231 gehalten. Dementsprechend sind die anderen Führungsstutzen 225 nacheinander in die genannten Öffnungen eingesetzt.

Zentral am Lagerschild 13.2 ist eine Nabe 337 angeformt, ein die das Lager 28 eingesetzt ist (siehe Figur 1). Diese Nabe ist hier mit vier Streben 340 mit dem Stirnbereich 334 des Lagerschilds 13.2 verbunden. Zwischen den Streben 340 und dem Stirnbereich 334 befinden sich vier große Öffnungen 40, durch die im Betrieb des Generators bzw. der elektrischen Maschine 10 verursacht durch die Bewegung des Lüfters 30 Kühlluft angesaugt wird. Drei dieser Öffnungen 40 sind mit durchgängigen Nischen 346 versehen, die am radial äußeren Rand 349 eingebracht sind. In diese Nischen 346 ragen die Podeste 295 der Verschaltungseinheit 144 derart hinein, dass diese auf einem gemeinsamen axialen Niveau (Drehachse 26) sind. D. h. in eine aus den Öffnungen (Hauptöffnungen) 40 gebildeten Ebene erstrecken sich das Podest 295 und ggf. der Anschlussdraht 216, der sich dann beispielsweise ausschließlich in dieser Ebene erstreckt. Die Form der Podeste 295 und die Form der Nischen 346 sind aneinander angepasst. Dies bedeutet, dass die Podeste 295 die Nischen 346 nahezu oder vollständig ausfüllen. Vorteil dieser Anordnung ist eine möglichst große nutzbare Öffnung 40 bei nach Möglichkeit kleinem effektivem Randanteil der Öffnung 40 zu erreichen. Dies hat den Effekt, dass strömungsmechanisch bedingte Randeffekte, wie beispielsweise den Kühlluftdurchsatz verringernde Grenzschichten, weniger ausgebildet sind. Darüber hinaus grenzt zumindest eine Öffnung 40 - hier drei - an einen ebenen Stirnflächenbereich 352, der gegenüber anderen Stirnflächenbereichen 355 von axial außen betrachtet abgesenkt ist. Dies hat den Vorteil, dass trotz ggf. aufliegendem Steg 226 ein größerer Spalt zwischen Steg 226 und Lagerschild 13.2 erzeugt ist, der der Strömungswiderstand senkt und den Luftdurchsatz dadurch erhöht. Bei einer dreisträngigen elektrischen Maschine 10 würden wie im hier beschriebenen Fall drei Nischen 346 durch entsprechende Podeste 295 besetzt sein. Bei einer fünfsträngigen Maschine wären fünf Nischen 346 durch entsprechende Podeste 295 besetzt. Es ist jedoch nicht notwendiger Weise so, dass bei jedem Podest 295 eine Nische 346 ausgebildet sein muss.

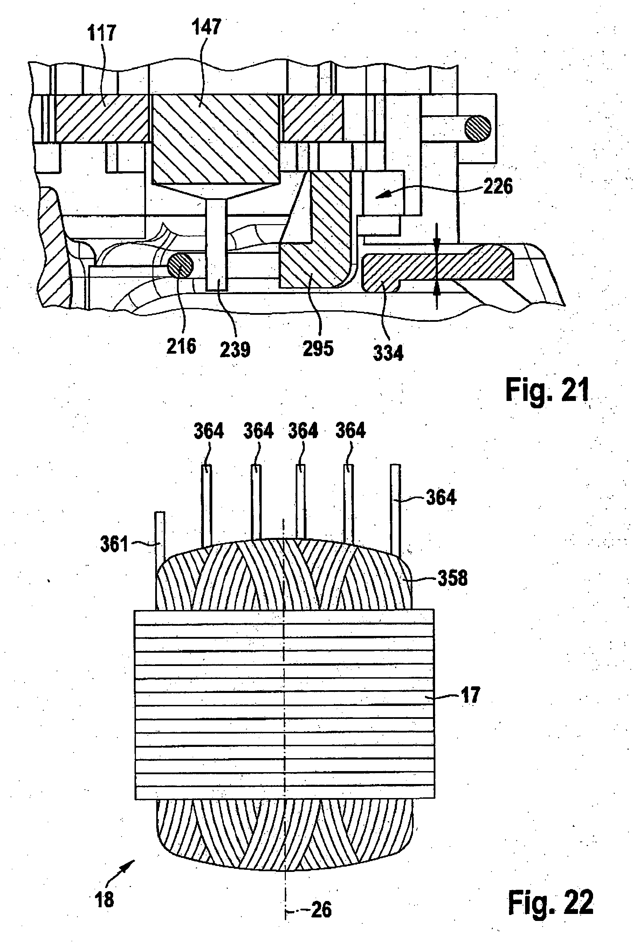

Der bereits oben erwähnte kurze Führungsstutzen 225 bedingt auf der Seite des Stators 16 mit seinem Ständereisen 17, in dessen Nuten eine Ständerwicklung 18 mit einzelnen Phasen- oder Strangwicklungen 358 eingelegt ist, Figur 22, bei einem Ständeranschluss 361 eine deutlich kürzere vorzugsweise axiale Erstreckung (Drehachse 26) bzw. Länge gegenüber den anderen Ständeranschlüssen 364. Deutlich kürzer bedeuten bspw. 20 mm Längenunterschied (bspw. eingebauter Zustand, in der elektrischen Maschine). Im Rahmen der vorliegenden Konstruktion befindet sich somit ein Ständeranschluss 361 im kurzen Führungsstutzen 225 unter dem Regler 231, während die anderen hier fünf Ständeransehlüsse 364 in den anderen (langen) Führungsstutzen 225 eingeschoben sind. Alle Ständeranschlüsse 361 und Ständeranschlüsse 364 erstrecken sich in axialer Richtung (Drehachse 26), z. B. in den Führungsstutzen 225.

Das zweite ab den Figuren 13 beschriebene Ausführungsbeispiel weist einen inneren Holm 87 auf, der in Bezug zur Drehachse 26 und an der gleichen Umfangsposition auf einem größeren Radius als der Innenrand 367 angeordnet ist. Dies führt dazu, dass sich eine zentrale Öffnung 370 der Gleichrichtereinrichtung 139 vom Lagerschild 13.2 nach axial außen weg trichterartig vergrößert.

In allen Ausführungsbeispielen sind die gezeigten Böden 373 der als Einpressdioden beispielhaft dargestellten Stromgleichrichter 147 und 150 vom Lagerschild 13.2 weggerichtet.

Der Kühlkörper 53 ist einstückig aus einem Metall bzw. einer Metalllegierung mittels eines Druckgussverfahrens hergestellt. Es kommt hierzu Aluminium oder eine Aluminiumlegierung zum Einsatz. Für den Kühlkörper 117 kommen die gleichen Materialien zum Einsatz.

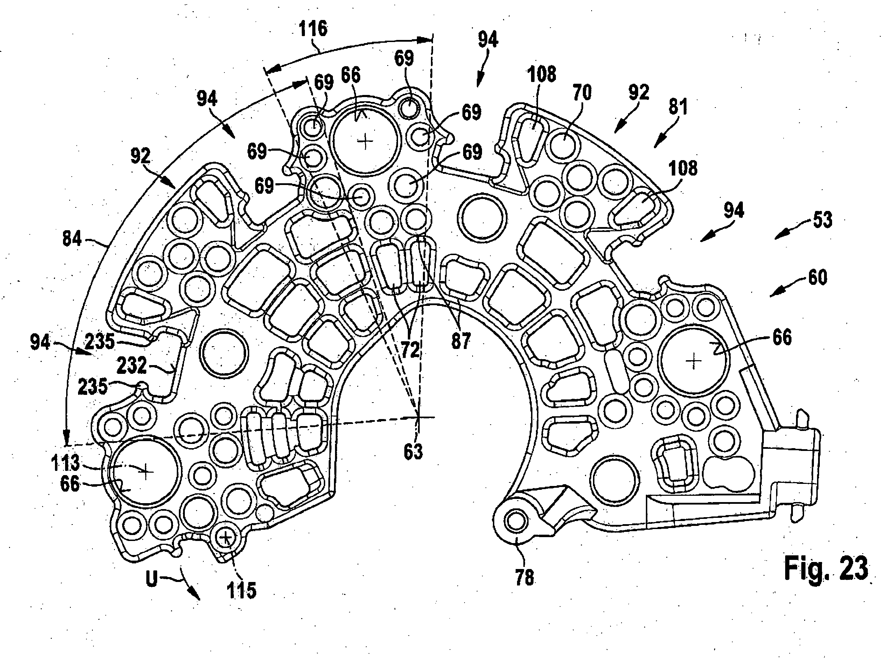

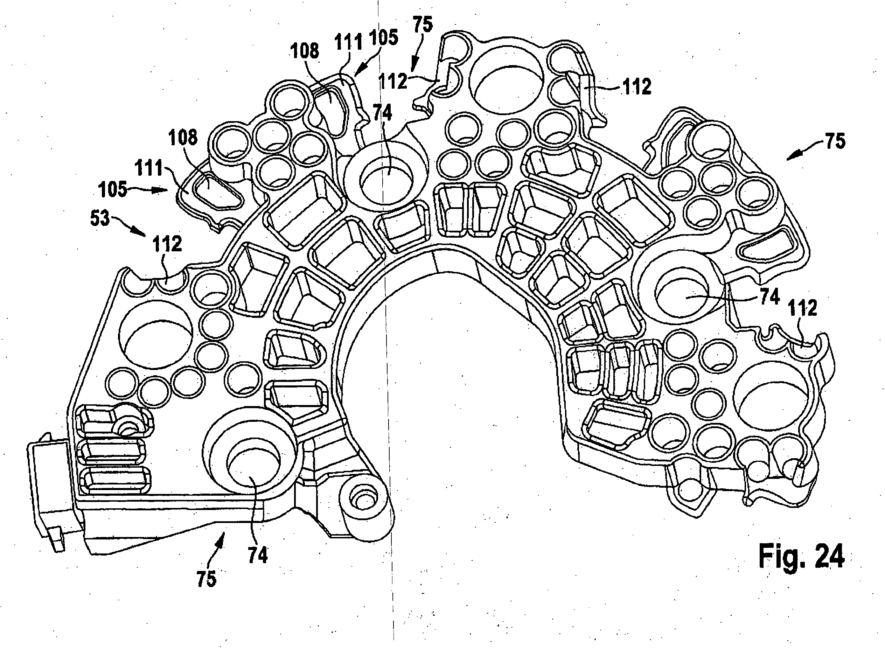

In Figur 23 und in Figur 24 ist ein weiterer ersten Kühlkörper 53 eines dritten Ausführungsbeispiels in zwei verschiedenen Ansichten gezeigt. Dieser Kühlkörper 53 weist wiederum einen bogenförmigen Körperbereich 60 mit einer zentralen Mitte 63 auf. Diese zentrale Mitte 63 deckt sich im an das Gehäuse 13 montierten Zustand mit der Drehachse 26. Der Kühlkörper 53 hat drei Aufnahmen 66, die dazu dienen, jeweils einen Stromgleichrichter aufzunehmen. Der Stromgleichrichter ist hier beispielsweise eine Plusdiode. Die Aufnahmen 66 haben hier die Gestalt eines Loches, in die später beispielsweise sogenannte Einpressdioden (Plusdioden) eingedrückt werden. Alternativ kann auch hier u. a. beispielsweise eine Vertiefung in der Oberfläche des ersten Kühlkörpers 53 vorgesehen sein, s. a. vorstehende Bemerkungen zu Diodenbefestigungen. Darüber hinaus weist auch dieser Kühlkörper 53 etliche Öffnungen auf, die zur Durchströmung des im Betrieb heißen Kühlkörpers 53 mit Kühlmitteln dienen. Um eine Aufnahme 66 herum sind bogenförmig aneinander gereiht erste Öffnungen 69 angeordnet. Diese ersten Öffnungen 69 sind in Umfangsrichtung U beiderseits einer Aufnahme 66, d. h. bspw. von der Mitte 63 aus gesehen rechts und links, angeordnet. Diese Art der Anordnung kann für eine Aufnahme 66 oder mehrere Aufnahmen 66 gelten. Dies gilt auch für die vorangehend beschriebenen Ausführungsbeispiele für Kühlkörper. Zwischen der mittleren Aufnahme 66 (Position 11 Uhr) und der zentralen Mitte 63 ist in Richtung zur zentralen Mitte 63 zumindest eine länglich geformte zweite Öffnung 72 angeordnet, wobei die zweite Öffnung 72 mit ihrer länglichen Form zumindest im Wesentlichen auf die zentrale Mitte 63 ausgerichtet ist. In weiterer Näherung kann auch hier festgestellt werden, dass zwischen der mittleren Aufnahme 66 mit den ersten Öffnungen 69 und der zentralen Mitte 63 in Richtung zur zentralen Mitte 63 mehrere länglich geformte zweite Öffnungen 72 angeordnet sind, wobei die zweiten Öffnungen 72 mit ihrer länglichen Form zumindest im Wesentlichen auf die zentrale Mitte 63 ausgerichtet sind.

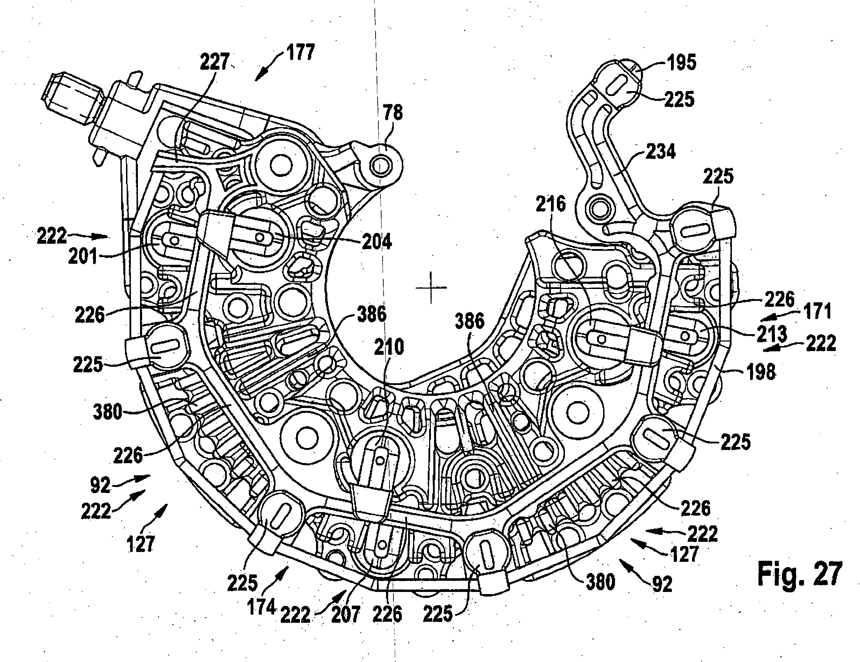

In dem Körperbereich 60 sind weiters mehrere, hier drei, zylindrische mit je einem Loch 74 versehene Senkbereiche 75 vorgesehen. Dort ist die Materialstärke des Kühlkörpers 53 auf ca. 40% dessen reduziert, die bei den Aufnahmen 66 vorgesehen ist. Diese Senkbereiche dienen wie bereits beispielsweise beim Ausführungsbeispiel 1 der Montage zur Befestigung der Gleichrichtereinrichtung an die äußere Seite des Lagerschilds 13.2. Eine Gewindehülse 78 dient zur Befestigung und Kontaktherstellung mit einem weiteren Bauteil der Gleichrichtereinrichtung. Wie bereits bei vorgenannten Ausführungsbeispielen, Figur 27 Figur 5a, Figur 5b, Figur 8, 13, 15, ist diese Gewindehülse 78 ein einstückig angeformtes Teil des Körperbereichs 60.

Auch hier sind mehrere Aufnahmen 66 vorhanden, die am Umfang 81 des Kühlkörpers 53 von einander beabstandet angeordnet sind.

Wie im ersten Ausführungsbeispiel ist in einem Segment 84 zwischen zwei Aufnahmen 66 ein Überhang 92 des Kühlkörpers 53 angeordnet, der hier im Beispiel mit mehreren beispielhaft kreisförmigen Löchern 70 ausgeführt ist. Der Überhang 92 ist beiderseits in Umfangsrichtung U durch große buchtförmige Aussparungen 94 von den Aufnahmen 66 und deren ersten Öffnungen 69 getrennt bzw. beabstandet. Ein radial inneres Ende der Aussparungen 94 ist auch hier von der zentralen Mitte 63 weniger weit entfernt als ein Zentrum 113 einer Aufnahme 66. Die zweiten Öffnungen 72 zwischen zwei bogenförmigen Holmen 87 sind durch einen Steg 90 getrennt. Der Steg 90 erstreckt sich vorzugsweise radial. Die beiden Holme 87 verlaufen zumindest in etwa kreisbogenförmig. Im Segment 84 zwischen zwei Aufnahmen 66 erstreckt sich von einem äußeren Holm 87 nach radial außen der Überhang 92. In Umfangsrichtung U weist das Kühlsegment 93 zu seinem seitlichen Rand 105 hin zumindest eine Öffnung 108 auf, deren Umrandung 111 teilweise eine geringere Materialstärke als andere Öffnungen 70 des Überhangs 92 hat. Insbesondere ist vorgesehen, dass der zu den Aussparungen 94 hin begrenzende seitliche Teil der Umrandung 111 und vorzugsweise der radial äußere Rand der seitlichen Öffnungen 108 eine geringere Materialstärke aufweist.

Mit Bezug zu Figur 23 wird hier angegeben, dass beispielhaft beide Überhänge 92 analog zu dem eben beschriebenen Überhang 92 gestaltet sind.

Um die Aufnahmen 66 herum sind die Öffnungen 69 angeordnet. Zur Verbesserung des Zugriffs zu nachfolgend gezeigten Anschlusskontakten, die in der Gleichrichtereinrichtung neben den Öffnungen 69 positioniert werden, ist vorgesehen, Umrandungen 112 der Öffnungen 69 auf der Seite der Öffnungen 69, die einem Zentrum 113 einer Aufnahme 66 abgewandt sind, in ihrer Materialstärke in Achsrichtung (Drehachse 26) bzw. in Richtung einer Profilachse 115 weniger stark auszuführen, als dies zwischen den Aufnahmen 66 und den Öffnungen 69 der Fall ist. Aus dem gleichen Grund weisen die seitlichen Öffnungen 108 eine geringere Materialstärke auf. Die Profilachse 115 erstreckt sich längs dem Profil bzw-Durchgangsprofil einer Öffnung 69.

Die Aufnahme 66, die ersten Öffnungen 69 und die zumindest eine länglich geformte zweite Öffnung 72 ist einem Sektor 116 ausgehend von der zentralen Mitte 63 befindlich, wobei der Sektor 116 eine Winkelbreite zwischen 25° und 40° aufweist. Dies gilt hier beispielhaft für die in Figur 23 auf Position 11 Uhr und Position 2 Uhr gezeigten Aufnahmen 66. Die Winkelbreite kann aber auch bei nur einer Aufnahme 66 realisiert sein (alle Ausführungsbeispiele).

Die buchtförmigen Aussparungen 94 sind jeweils mit zwei einander sich in Umfangsrichtung gegenüberstehenden Hakenelementen 235 versehen. Je zwei dieser paarweise angeordneten Hakenelemente 235 stehen sich so gegenüber, dass beide zusammen mit dem Außenumfang 232 einen Hinterschnitt finden, auf den später nochmals eingegangen werden wird.

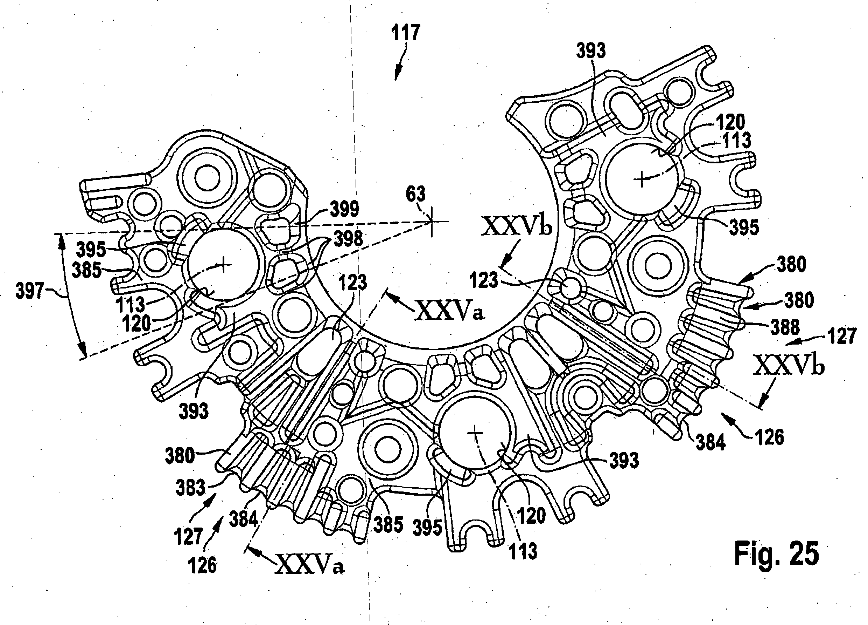

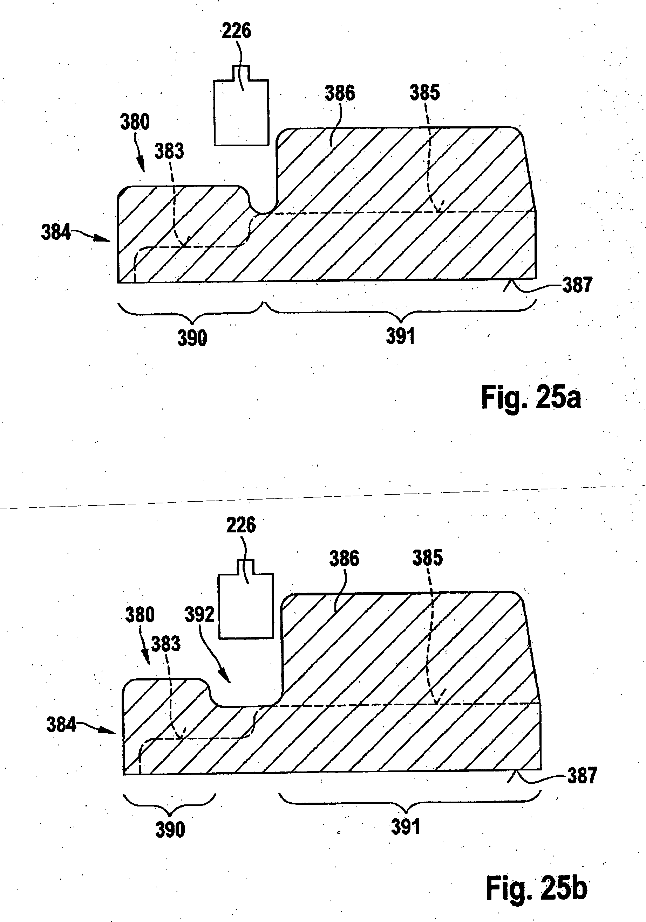

In Figur 25 ist ein weiterer Kühlkörper 117 abgebildet. Auch dieser Kühlkörper 117 hat drei Aufnahmen 120, die dazu dienen, jeweils einen Stromgleichrichter aufzunehmen. Der Stromgleichrichter ist hier beispielsweise eine Minusdiode.

Die Aufnahmen 120 haben hier die Gestalt eines Loches, in die später beispielsweise sogenannte Einpressdioden (Minusdioden) eingedrückt werden. Alternativ kann beispielsweise auch eine Vertiefung in der Oberfläche des weiteren Kühlkörpers 117 vorgesehen sein. Darüber hinaus weist der Kühlkörper 117 etliche Öffnungen 123 auf, die zur Durchströmung des im Betrieb heißen Kühlkörpers 117 mit Kühlmittel dienen.

An zwei Umfangsstellen 126 finden sich auch hier vorzugsweise einstückig angeformte Überhänge 127. Diese Überhänge 127 weisen eine gerippte Oberflächenstruktur auf. Diese gerippte Oberflächenstruktur weist demnach im Wesentlichen radial ausgerichtete längliche Kühlrippen 380 auf. Diese Kühlrippen, ragen auch über einen ebenen Flächenabschnitt bzw. weisen einen kannellierten Körperbereich auf, der sich zwischen den Kühlrippen 380 und vorzugsweise unter dem Steg 226 befindet. Die Kühlrippen 380 weisen zwischen sich in axialer Richtung betrachtet (Figur 25) jeweils eine Bucht 384 auf.

In einer Schnittdarstellung durch ein Segment des Kühlkörpers 117, in dem sich ein Überhang 127 befindet, gemäß Figur 25a ist unter Anderem eine Kühlrippe 380 geschnitten dargestellt. In dieser Schnittdarstellung ist anhand der gestrichelten Linie der ebene Flächenabschnitt 383 erkennbar. Ausgehend von einer oberen Ebene 385 erstreckt sich die Kühlrippe 380 auch oberhalb dieser oberen Ebene 385. Dies heißt nicht, dass die Kühlrippe 380 auch an der gleichen radialen Position sein muss. Direkt oberhalb der oberen Ebene 385 erstreckt sich eine im Vergleich mit der Kühlrippe 380 im Volumen deutlich größere Kühlrippe 386.

In Figur 25b ist an anderer Stelle ein Schnitt durch den Kühlkörper 117 gezeigt. Auch an dieser Stelle weist der Kühlkörper 117 eine obere Ebene 385 und einen ebenen Flächenabschnitt 383 auf. Die Struktur des Kühlkörpers 117 ähnelt an dieser Stelle der Struktur des Kühlkörpers an der Position des anderen Überhangs 127, der sich in Figur 25 in etwa auf der Position 7 Uhr befindet. Auch hier befinden sich zwischen den Kühlrippen 380 einzelne ebene Flächenabschnitte 383, die zu einer Basisebene 387 eine geringere Dicke aufweisen als der Abstand zwischen der oberen Ebene 385 und der Basisebene 387 beträgt. Mit anderen Worten: Der Kühlkörper 117 weist im Bereich mit den großen drei Kühlrippen 386 eine größere Dicke auf (exklusive der Kühlrippen 386) als der Kühlkörper 117 zwischen den Kühlrippen 380 aufweist. Die Kühlrippen 380 erstrecken sich nicht nur oberhalb der ebenen Flächenabschnitte 383, sondern auch oberhalb der oberen Ebene 385. Die Kühlrippen 380 können somit in zwei Flächenabschnitte eingeteilt werden: In einen ersten Flächen- bzw. Volumenabschnitt, der sich unterhalb der oberen Ebene 385 befindet und einen zweiten Abschnitt, der sich oberhalb der oberen Ebene 385 befindet.

Gemäß den Ansichten nach den Figuren 25a und 25b lässt sich ein radiales Profil der Kühlkörper 117 in den Umfangsbereichen, in denen sich ein Überhang 127 befindet, in zwei in Bezug zur Mitte 63 Ringbereiche 390 und 391 einteilen. Der Ringbereich 391 ist im Bezug zum Ringbereich 390 radial weiter innen liegend. Im Ringbereich 391 befinden sich großvolumigere Kühlrippen 386, im Ringbereich 390 befinden sich kleinvolumigere Kühlrippen 380. Man könnte stattdessen auch festhalten, dass die Materialstärke einer Rippe 386 im Ringbereich 391 ausgehend von der oberen Ebene 385 auf halber Höhe dicker ist als die Dicke einer Kühlrippe 380, gemessen auf halber Höhe ausgehend von dem ebenen Flächenabschnitt 383. An dieser Stelle kann auch festgehalten werden, dass der Ringbereich 391 in radialer Richtung betrachtet breiter als der Ringbereich 390 ist.

Bezüglich der Umgebung einer Aufnahme 120 des Kühlkörpers 117 ist zu dem zu erwähnen, dass eine Aufnahme 120 unmittelbar von einer ringförmigen Wand 393 teilweise umgeben ist. Es ist dabei vorgesehen, dass ausgehend von einem Zentrum 113 einer Aufnahme 120 und nach radial innen die ringförmige Wand 393 einen größeren Umfangsbereich rund um die Aufnahme 120 überstreckt als dies radial außerhalb des Zentrums 113 der Fall ist. Des Weiteren kann vorgesehen sein, dass die Aufnahme 120 in dem Bereich, den die ringförmige Wand 393 nicht begrenzt, eine im Volumen kleinere Randrippe 395 angeordnet ist. Größenangaben bezüglich ringförmiger Wand 393 und Randrippe 395 beziehen sich auf das Volumen oberhalb der oberen Ebene 285 des Kühlkörpers 117. Eine derartige Anordnung, wie sie hier für die Aufnahme 120 in Figur 25 links dargestellt ist, kann auch für die anderen Aufnahmen 120 vorgesehen sein.

Ein Segmentbereich 397, definiert durch die zentrale Mitte 63 des Kühlkörpers 117 sowie in Figur 25 eingezeichnete Strahlen, die von der zentralen Mitte 63 ausgehen und eine Aufnahme 120 tangieren, kann auch wie folgt beschrieben werden: Von radial außen betrachtet folgt zunächst eine eingebuchtete Kontur, an die sich zumindest eine Kühlöffnung anschließt, die zwischen der Außenkontur und der Aufnahme 120 angeordnet ist. Danach folgt die Aufnahme 120 selbst, die zumindest mit der ringförmigen Wand 393 begrenzt ist. Optional ist die Randrippe 395 vorhanden. Ausgehend von der ringförmigen Wand 393 erstreckt sich nach radial innen eine Struktur mit mindestens einer Rippe 398, die radial innen vorzugsweise in einem Ringabschnitt 399 (Holm) endet.

Die Kühlrippen 386 im Ringbereich 391 brauchen nicht einheitlich gestaltet sein. Gleiches gilt für die Kühlrippen 380 im Ringbereich 390.

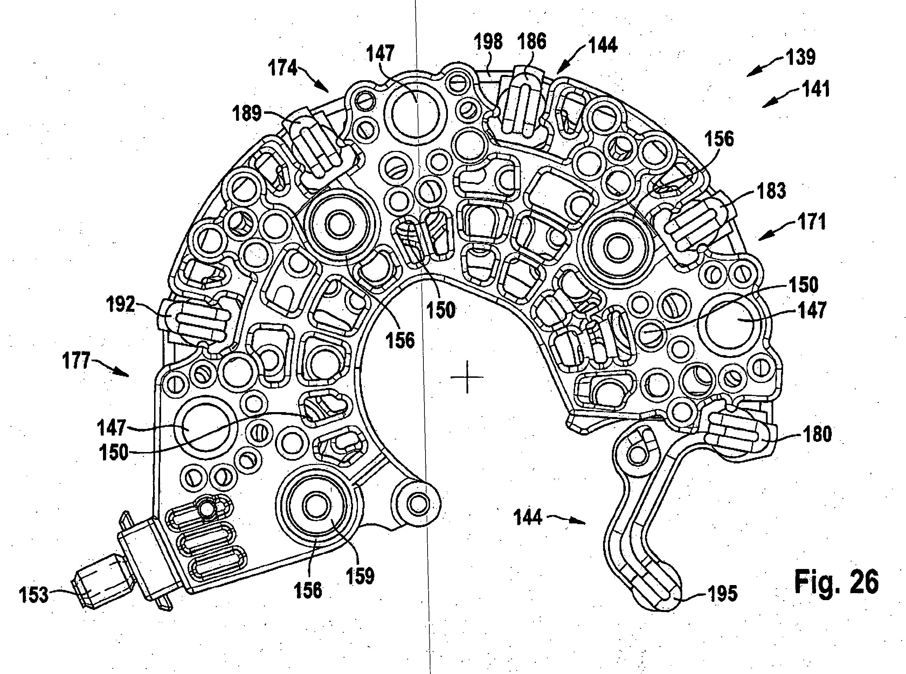

In Figur 26 ist analog zur Darstellung in Figur 8 die zur Gleichrichtereinrichtung 139 zusammen gebaute Kühleinrichtung 141 aus erstem Kühlkörper 53 (Pluskühlkörper), zweitem Kühlkörper 117 (Minuskühlkörper), der Verschaltungseinheit 144, positiven Stromgleichrichtern 147 (Plusdioden), negativen Strorpgleichrichtern 150 (Minusdioden), B+-Bolzen 153, Isolationshülsen 156 und Nieten 159 (Rohrnieten) gezeigt. Des Weiteren sind hier nicht weiter erkennbare Distanzstücke verwendet. Die Ansicht auf die Kühleinrichtung 141 entspricht im Bezug zur Figur 1 bei abgenommener Schutzkappe 47 der Ansicht von rechts in Richtung der Drehachse 26.

Bei der Konstruktion des dritten Ausführungsbeispiels, welches in den Figuren 23 bis 27 dargestellt ist, wurden die Hakenelemente 325 des zweiten Ausführungsbeispiels übernommen. Die Funktion ist die Gleiche, wie sie weiter oben zu Figur 15 beschrieben ist. Im Übrigen entspricht die in Figur 26 abgebildete Verschaltungseinheit 144 zumindest im Wesentlichen der zuvor in Figur 9 gezeigten Verschaltungseinheit 144.

Figur 27 zeigt die zusammengebaute Einrichtung 141 von der anderen, in Figur 26 nicht gezeigten Seite.

Die in Figur 27 dargestellte Anordnung der Kühleinrichtung 141 entspricht im Wesentlichen der Darstellung in Figur 9 einschließlich im Wesentlichen der dortigen Beschreibung zur Figur 9.

Darüber hinaus wird ergänzt, dass die Kühlrippen 380 und die Kühlrippen 386 in der axialen Ansicht gemäß Figur 27 durch einen Steg 226 unterbrochen sind bzw. in radialer Richtung angeordnet zunächst Kühlrippen 380, dann der Steg 226 und dann die Kühlrippen 386 angeordnet sind. Anders gesprochen kann man auch formulieren, dass in axialer Ansicht beiderseits eines Stegs 226 sowohl eine Kühlrippe 386 als auch eine Kühlrippe 380 angeordnet ist, siehe auch Figur 25b und Figur 27. Von radial innen beschrieben, folgt zunächst der Ringbereich 391 mit den Kühlrippen 386, dann der Steg 226 der Verschaltungseinheit 144, unter dem sich ein Zwischenraum 392 befindet, der, wie im Beispiel, vorzugsweise mit mindestens einem Rippenbereich 388 einer Kühlrippe 380 gestaltet ist, der in axialer Richtung betrachtet niedriger als eine Kühlrippe 386 und niedriger als die höchste Höhe einer Kühlrippe 380 des Ringbereichs 390 ist. Diese Aussage gilt für ein Segment des Kühlkörpers 117, in dem sich ein Überhang 127 befindet

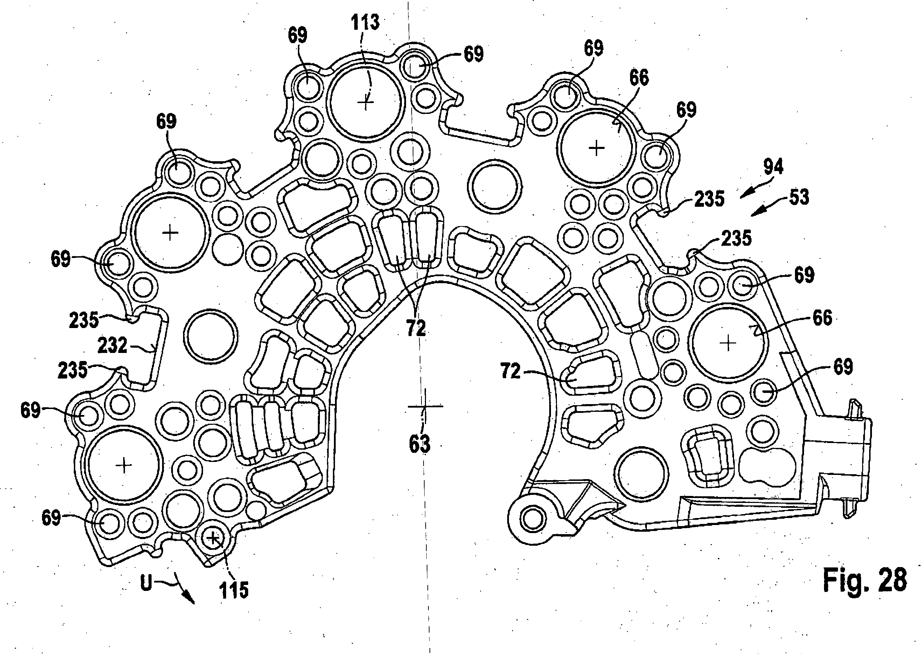

Das Ausführungsbeispiel des Kühlkörpers 53 nach Figur 28 unterscheidet sich vom Ausführungsbeispiel nach Figur 23 dadurch, dass nicht drei Aufnahmen 66 für Stromgleichrichter 147 vorgesehen sind, sondern fünf Aufnahmen 66. Dies deshalb, weil der in Figur 28 dargestellte Kühlkörper 53 für einen Wechselstromgenerator mit fünf Phasen vorgesehen ist. Das hier vierte Ausführungsbeispiel weist nunmehr statt der aufnahmelosen Überhänge 92 Aufnahmen auf, die wiederum von den ersten Öffnungen 69 umgeben sind. Um eine Aufnahme 66 herum, sind bogenartig aneinandergereiht erste Öffnungen 69 angeordnet. Diese ersten Öffnungen 69 sind in Umfangsrichtung U beiderseits einer Aufnahme 66, d. h. bspw. von der Mitte 63 aus gesehen rechts und links, angeordnet. Zwischen den Aufnahmen 66 und der zentralen Mitte 63 ist in Richtung zur zentralen Mitte 63 zumindest eine länglich geformte zweite Öffnung 72 angeordnet, wobei die zweite Öffnung 72 mit ihrer länglichen Form zumindest im Wesentlichen auf die zentrale Mitte 63 ausgerichtet ist. In weiterer Näherung kann auch festgestellt werden, dass zwischen einer Aufnahme 66 mit den ersten Öffnungen 69 und der zentralen Mitte 63 in Richtung zur zentralen Mitte 63 mehrere länglich geformte zweite Öffnungen 72 angeordnet sind, wobei die zweiten Öffnungen 72 mit ihrer länglichen Form zumindest im Wesentlichen auf die zentrale Mitte 63 ausgerichtet sind.

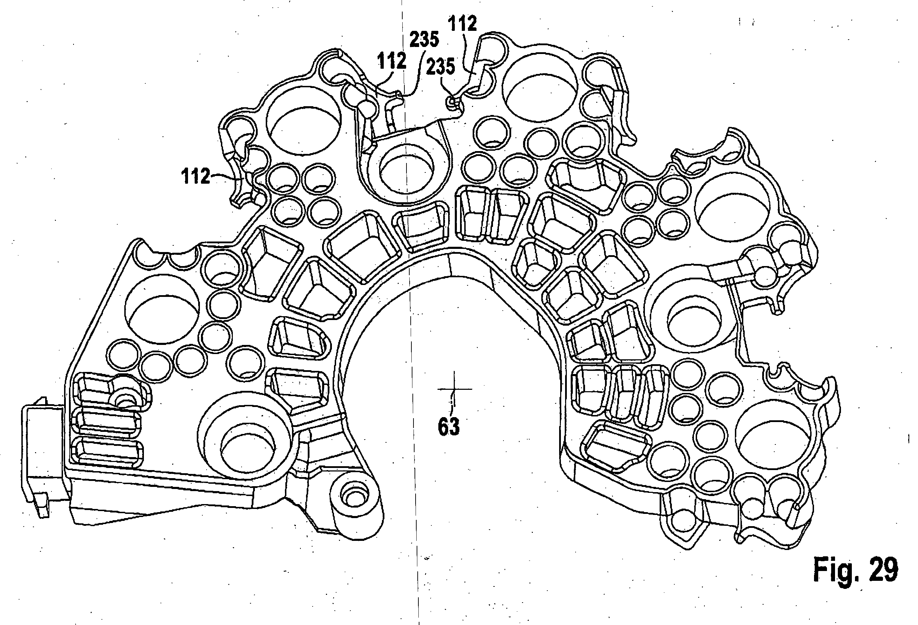

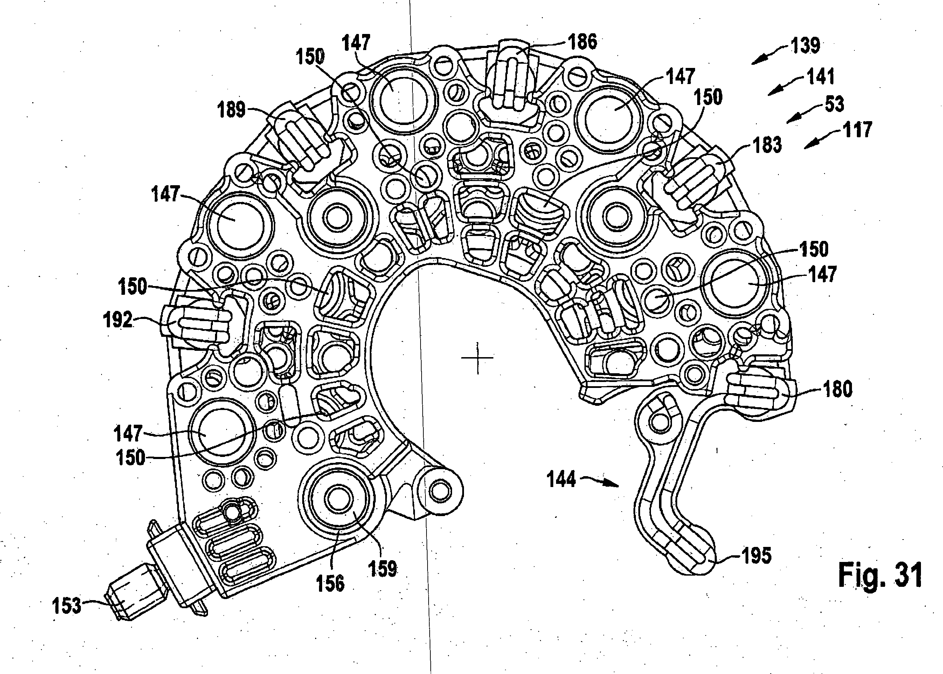

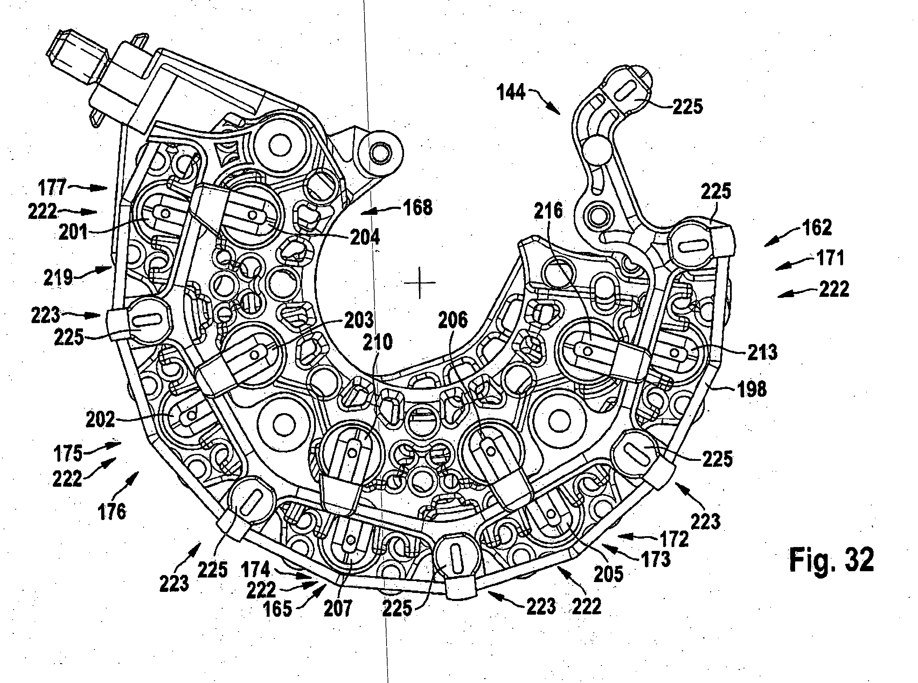

Wie bei der zuvor beschriebenen Ausführung sind bei der hier vorzusehenden Verschaltungseinheit 144, siehe auch Figur 31 und 32, fünf Führungsstutzen 225 vorgesehen, die sich in unmittelbarem Bereich des Kühlkörpers 53 befinden. Diese fünf Führungsstutzen 225 sind im Bereich der bzw. in den Aussparungen 94 angeordnet und stehen paarweise so in Beziehung, dass zwei Hakenelemente 235 zusammen mit dem Außenumfang 232 einen Hinterschnitt bilden, durch den die Führungsstutzen 225 am Kühlkörper 53 gehalten bzw. in dessen definierter Nähe geführt werden. Bei dem Kühlkörper 53 nach Figur 28 und Figur 29 ist vorgesehen, dass zur Verbesserung des Zugriffs zu nachfolgend gezeigten Anschlusskontakten, die in der Gleichrichtereinrichtung neben den Öffnungen 69 positioniert werden, Umrandungen 112 der Öffnungen 69 auf der Seite der Öffnungen 69, die einem Zentrum 113 einer Aufnahme 66 abgewandt sind, in ihrer Materialstärke in Achsrichtung (Drehachse 26) bzw. in Richtung einer Profilachse 115 weniger stark auszuführen als dies zwischen den Aufnahmen 66 und den Öffnungen 69 der Fall ist. Aufgrund der Vielzahl der Aufnahmen 66 ist beispielsweise zwischen zwei unmittelbar benachbarten Aufnahmen 66 ein Führungsstutzen 225 angeordnet und demzufolge stehen sich Hakenelemente 235 zweier benachbarter Aufnahmen 66 direkt gegenüber, um einen Führungsstutzen 235 aufzunehmen bzw. diesen relativ zum Kühlkörper 53 zu führen.

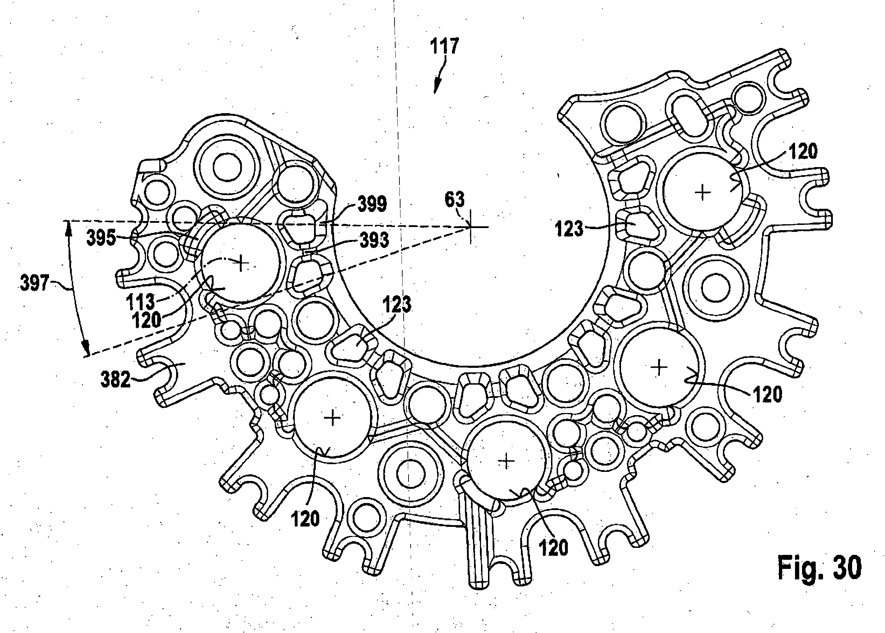

In Figur 30 ist ein weiterer Kühlkörper 117 abgebildet, der Teil einer Kühleinrichtung einer Gleichrichtereinrichtung nach einem vierten Ausführungsbeispiel sein soll. Dieser Kühlkörper 117 hat fünf Aufnahmen 120, die dazu dienen, jeweils einen Stromgleichrichter aufzunehmen. Der Stromgleichrichter ist hier beispielsweise eine Minusdiode.

Die Aufnahmen 120 haben hier die Gestalt eines Loches, in die später beispielsweise sogenannte Einpressdioden (Minusdioden) eingedrückt werden. Alternativ kann beispielsweise auch eine Vertiefung in der Oberfläche des weiteren Kühlkörpers 120 vorgesehen sein. Darüber hinaus weist der Kühlkörper 117 etliche Öffnungen 123 auf, die zur Durchströmung des im Betrieb heißen Kühlkörpers 117 mit Kühlmittel dienen.

Bezüglich der Umgebung einer Aufnahme 120 des Kühlkörpers 117 ist zu dem zu erwähnen, dass eine Aufnahme 120 von einer ringförmigen Wand 393 teilweise umgeben ist. Es ist dabei vorgesehen, dass ausgehend von einem Zentrum 113 eine Aufnahme und nach radial innen die ringförmige Wand 393 einen größeren Umfangsbereich rund um die Aufnahme 120 überstreckt als dies radial außerhalb des Zentrums 113 der Fall ist. Des Weiteren kann vorgesehen sein, dass die Aufnahme 120 in dem Bereich, den die ringförmige Wand 393 nicht begrenzt, eine im Volumen kleinere Randrippe 395 angeordnet ist Größenangaben bezüglich ringförmiger Wand 393 und Randrippe 395 beziehen sich auf das Volumen oberhalb der Ebene 382 des Kühlkörpers 117. Eine derartige Anordnung, wie sie hier für die Aufnahme 120 in Figur 30 links dargestellt ist, kann auch für die anderen Aufnahmen 120 vorgesehen sein.

Ein Segmentbereich 397, definiert durch die zentrale Mitte 63 des Kühlkörpers 117 sowie in Figur 30 eingezeichnete Strahlen, die von der zentralen Mitte 63 ausgehen und eine Aufnahme 120 tangieren, kann auch wie folgt beschrieben werden: Von radial außen betrachtet folgt zunächst eine eingebuchtete Kontur, an die sich zumindest eine Kühlöffnung anschließt, die zwischen der Außenkontur und der Aufnahme 120 angeordnet ist. Danach folgt die Aufnahme 120 selbst, die zumindest mit der ringförmigen Wand 393 begrenzt ist. Optional ist die Randrippe 395 vorhanden. Ausgehend von der ringförmigen Wand 393 erstreckt sich nach radial innen eine Struktur mit mindestens einer Rippe 398, die radial innen vorzugsweise in einem Ringabschnitt 399 (Holm) endet.

In der Figur 31 ist die zur Gleichrichtereinrichtung 139 zusammen gebaute Kühleinrichtung 141 aus erstem Kühlkörper 53 (Pluskühlkörper), zweitem Kühlkörper 117 (Minuskühlkörper) gemäß den Figuren 28, 29 und 30, der Verschaltungseinheit 144, positiven Stromgleichrichtern 147 (Plusdioden), negativen Stromgleichrichtern 150 (Minusdioden), B+-Bolzen 153, Isolationshülsen 156 und Nieten 159 (Rohrnieten). Des Weiteren sind hier nicht erkennbare Distanzstücke verwendet. Die Ansicht auf die Kühleinrichtung entspricht im Bezug zu Figur 1 bei abgenommener Schutzkappe 47 der Ansicht von Rechts der Drehachse 26.

Die Verschaltungseinheit 144 unterscheidet sich in sofern von den zuvor beschriebenen Verschaltungseinheiten, als dass nunmehr nicht nur drei Paare 171, 174 und 177 aus je einem positiven Stromgleichrichter 147 und je einem negativen Stromgleichrichter 150 miteinander zu verschalten sind, sondern dass es nur fünf Paare, 171, 172, 174, 175 und 177 sind. Dort wo bisher (Figur 9 beispielsweise) Stege 226 ohne Anschlusskontakte vorhanden sind, sind nunmehr weitere Anschlusskontakte vorgesehen, um die zusätzlichen Paare 175 und 172 zu verschalten.

Figur 31 und Figur 32 zeigen die zur Gleichrichtereinrichtung 139 zusammengebaute Kühleinrichtung 141 aus erstem Kühlkörper 53 (Pluskühlkörper), zweitem Kühlkörper 117 (Minuskühlkörper), der Verschaltungseinheit 144, positiven Stromgleichrichtern 147 (Plusdioden), negativen Stromgleichrichtern 150 (Minusdioden), B+-Bolzen 153, Isolationshülsen 156 und Nieten 159 (Rohrnieten). Des Weiteren sind hier nicht erkennbare Distanzstücke verwendet. Die Ansicht auf die Kühleinrichtung 141 entspricht in Bezug zur Figur 1 bei abgenommener Schutzkappe 47 der Ansicht von rechts in Richtung der Drehachse 26.

Die Verschaltungseinheit 144 weist in bekannter Weise mehrere Leiterabschnitte 162, 173, 165, 176 und 168 auf, die dazu dienen je ein Paar 171, 172, 174, 175 und 177 aus je einem positiven Stromgleichrichter 147 (Plusdiode) und je einem negativen Stromgleichrichter 150 miteinander so zu verschalten, dass die an den Anschlusskontakten 180, 183, 186, 189, 192 und 195 (über den Umfangsbogen 198) angeschlossenen Ständerwicklungen und die von ihnen gelieferte Wechselspannung gleichgerichtet wird. Der Anschlusskontakt 180 ist mit dem Paar 171, der Anschlusskontakt 183 ist mit dem Paar 172, der Anschlusskontakt 186 ist mit dem Paar 174, der Anschlusskontakt 189 ist mit dem Paar 175, der Anschlusskontakt 192 und auch der Anschlusskontakt 195 (über den Umfangsbogen 198) sind mit dem Paar 177 verbunden.

Figur 32 zeigt die zusammengebaute Kühleinrichtung 141 von der anderen, in Figur 31 nicht gezeigten Seite. Von dieser Seite sind Anschlusskontakte 201 und 204, Anschlusskontakte 207 und 210, Anschlüsskontakte 213 und 216, Anschlusskontakte 202 und 203 und die Anschlusskontakte 205 und 206 erkennbar, die je ein Paar 177, 174, 171, 175 und 172 aus je einem positiven Stromgleichrichter 147 (Plusdiode) und je einem negativen Stromgleichrichter 150 miteinander verschalten. Diese Verschaltung entspricht einer üblichen Brückengleichrichterschaltung. Die positiven Stromgleichrichter 147 (Plusdioden), Einpressdioden wie auch die negativen Stromgleichrichter 150 (Minusdioden), sind mit dem ersten Kühlkörper 53 elektrisch leitfähig verbunden, so dass über die Stromgleichrichter 150 am B+-Bolzen 153 im Betriebsfall (eingeschalteter Zustand, Erregerstrom, drehender Rotor 20) eine positive Spannung anliegt.

Der Löcher 123 aufweisende Kühlkörper 117 ist im Wesentlichen ringsegmentförmig. Die beiden Kühlkörper 53 und 117 sind durch- und zwischenströmbar mit Abstand übereinander geschichtet. Der Umfangsbogen 198 befindet sich in Bezug zur Drehachse 26 an der gleichen axialen Position wie ein Außenrand 219. Wie bereits aus Figur 9 erkennbar ist, weist der Umfangsbogen 198 des Leiterabschnittes 168 mehrere Knickstellen 222 auf. Einige dieser Knickstellen 222 sind an einer gleichen Umfangsposition wie Anschlusskontakte 201, 202, 205, 207 und 213. Die Knickstellen 222 führen dazu, dass ein hier nicht näher bezeichneter Abstand zwischen einer Knickstelle 222 und einem Anschlusskontakt 201, 202, 205, 207 und 213 größer ist, als wenn an der Position der Knickstelle 222 ein einfacher Kreisbogen vorgesehen wäre. Ein an der Knickstelle 222 bestimmter Knickwinkel ist so angeordnet, dass sich der Knickwinkel auf der radialen Innenseite des Umfangsbogens befindet. Der zum Knickwinkel komplementäre Außenwinkel ist größer als der Knickwinkel. Der Umfangsbogen 198 erstreckt sich in Bezug zum Mittelpunkt (Drehachse 26) über ein Winkelmaß, dass größer ist als der Winkel, über den sich die Stromgleichrichter 147 und 150 insgesamt im Kühlkörper 53 und 117 erstrecken. Anders ausgedrückt, erstreckt sich Umfangsbogen 198 in Bezug zum Mittelpunkt (Drehachse 26) über ca. 225° des Umfangs. Der Umfangsbogen 198 ist an den Führungsstutzen 225 mittels einstückig angeformter Ösen 223 abgestützt.

Die Art und Weise, wie die in den Figuren 31 und 32 gezeigte Verschaltungseinheit 144 aufgebaut ist, wird auch durch nachfolgende Beschreibung ergänzend deutlich: Im Stator 16 ist eine fünfphasige Ständerwicklung 18 eingelegt. Auf Grund der Lage der sogenannten Wicklungsanfänge und Wicklungsenden der fünfphasigen Ständerwicklung 18 - siehe hierzu auch DE 10 2009 055 043 A1, z. B. Figur 2 - wird deutlich, dass ein Wicklungsanfang einer Phasenwicklung und ein Wicklungsende einer anderen Phasenwicklung am Umfang der Ständerwicklung 18 sehr weit auseinander liegen. Während gemäß der eben zitierten Offenlegungsschrift ein dort nicht näher bezeichneter länger Verbindungsdraht am Umfang der Ständerwicklung 18 gelegt werden muss (geringe Schüttelfestigkeit), ist dies gemäß dem hier beschriebenen Ausführungsbeispiel nicht erforderlich. Der Umfangsbogen 198 verbindet ausnahmsweise einen Wicklungsanfang einer Phasenwicklung und ein Wicklungsende einer anderen Phasenwicklung mittels zweier Anschlusskontakte 192 und 195 (hohe Schüttelfestigkeit), während an den anderen Anschlusskontakten 189, 186, 183 und 180 jeweils ein Wicklungsanfang einer Phasenwicklung und ein Wicklungsende einer anderen Phasenwicklung zusammengefasst sind.

In einer Seitenansicht lässt sich die Gleichrichtereinrichtung 139 wie folgt beschreiben: Einige Überhänge mit den Aufnahmen 66 weisen in Umfangsrichtung U rechts und links zunächst eine Aussparung 94 auf, in der ein Führungsstutzen 225 sitzt.

Die Verschaltungseinheit 144 weist an im Beispiel nach Figur 31 und 32 insgesamt sechs Positionen Führungsstutzen 225 auf. Diese Führungsstutzen 225 haben die Aufgabe, mit ihren in Figur 32 zum Betrachter gerichteten trichterförmigen Enden einige Leiterenden der Ständerwicklung 18 aufzunehmen und gezielt zu den aus den Führungsstutzen austretenden und sich abgewinkelt darüber erstreckenden (U- bzw. schlaufenförmigen) Anschlusskontakten 180, 183, 186, 189, 192 und 195 zu führen, damit eine vorzugsweise maschinelle Kontaktierung zwischen den Leiterenden und den Anschlusskontakten 180, 183, 186, 189, 192 und 195 leicht möglich ist. Vier der rohrartigen Führungsstutzen 225 und je ein Anschlusskontakt 183, 186, 189 und 192 der Verschaltungseinheit 144 befinden sich zwischen zwei Aufnahmen 66. Die beiden anderen Führungsstutzen 225, in Figur 31 an den Positionen "5-Uhr" und ca. "6-Uhr", sind außerhalb der Außenkontur des ersten Kühlkörpers 53. Der Führungsstutzen 225, welcher sich zwischen dem Lagerschild 13.2 und dem Regler 231 in Richtung der Drehachse 26 befindet, ist in Richtung der Drehachse 26 betrachtet, außerhalb der Außenkontur des ersten Kühlkörpers 53 angeordnet.

Während der Führungsstutzen 225 an der "5-Uhr"-Position von seiner Größe und Gestaltung her im Wesentlichen wie die anderen vier Führungsstutzen 225 gestaltet ist, weist der Führungsstutzen 225 an der "6-Uhr"-Positon eine Besonderheit auf. So weist dieser nachfolgend "kleine" Führungsstutzen 225 genannte Führungsstutzen 225 zwar auch einen Anschlusskontakt 195 auf. Der Führungsstutzen 225 selbst ist jedoch ein kleiner Führungsstutzen 225 und somit in Bezug zur Drehachse 26 kürzer als die anderen Führungsstutzen 225, siehe auch Figur 10 und Figur 11 und zugehörige Beschreibung. Die Führungsstutzen 225 sind durch Stege 226 miteinander einstückig verbunden.

Die Verschaltungseinheit 144 befindet sich größtenteils in einem nur wenig bis gar nicht mit Kühlluft umströmten Bereich (Strömungs-Totgebiet). Dieser Bereich ist im radial äußeren Bereich (Drehachse 26) unterhalb des ersten Kühlkörpers 53 (Pluskühlkörper). Jedenfalls gilt dies für die Stege 226 und den Umfangsbogen 198, die beide in Bezug zur radialen Erstreckung des ersten Kühlkörpers 53 (Pluskühlkörper) unter einer äußeren Hälfte seiner radialen Erstreckung angeordnet sind. "Unter" einer äußeren Hälfte bedeutet, dass sich die Stege 226 und der Umfangsbogen 198 zwischen dem Lagerschild und dem Kühlkörper 53

(Pluskühlkörper) befinden. Des Weiteren decken sich vorzugsweise der Umfangsbogen 198 und ein radial äußerer Rand der Aufnahmen 66, s. a. Figur 32.

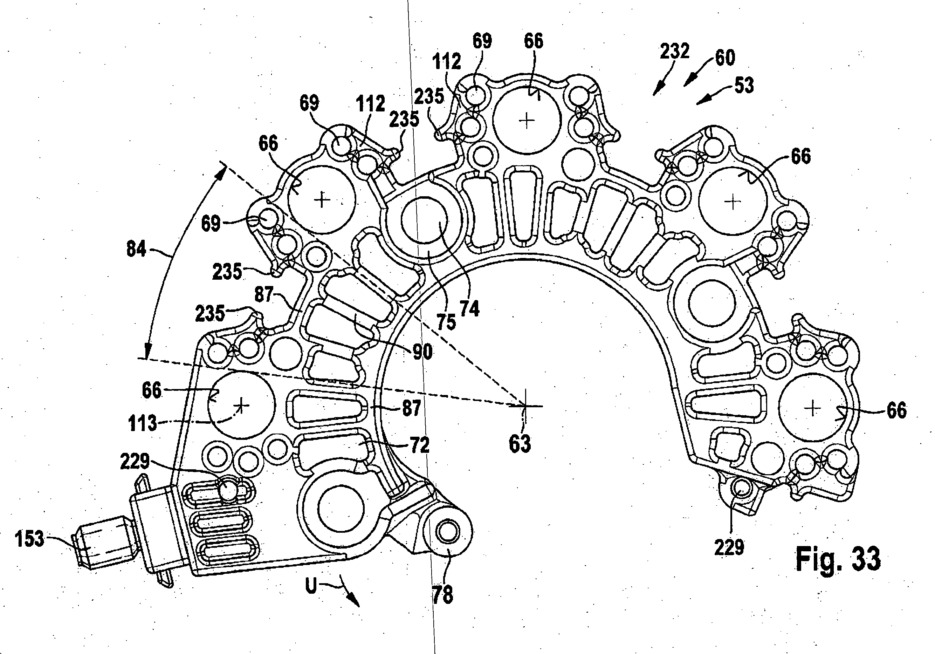

Das Ausführungsbeispiel gemäß den Figuren 33, 34, 35 und 36 geht aus von dem zweiten Ausführungsbeispiel.

In Figur 33 ist in einem weiteren Ausführungsbeispiel ein erster Kühlkörper 53 abgebildet. Dieser Kühlkörper 53 weist einen bogenförmigen Körperbereich 60 auf. Dieser bogenförmigen Körperbereich 60 weist eine zentrale Mitte 63 auf. Diese zentrale Mitte 63 deckt sich im an das Gehäuse 13.2 montierten Zustand mit der Drehachse 26. Der Kühlkörper 53 hat drei Aufnahmen 66, die dazu dienen, jeweils einen Stromgleichrichter aufzunehmen. Der Stromgleichrichter ist hier beispielsweise eine Plusdiode. Die Aufnahmen 66 haben hier die Gestalt eines Loches, in die später beispielsweise sogenannte Einpressdioden (Plusdioden) eingedrückt werden. Statt eines Loches kann zur Befestigung der Diode alternativ beispielsweise auch eine Vertiefung in der Oberfläche des ersten Kühlkörpers 53 vorgesehen sein, vgl. auch die Beschreibung zu vorgenannten Ausführungsbeispielen. Darüber hinaus weist der Kühlkörper 53 etliche Öffnungen auf, die zur Durchströmung des im Betrieb heißen Kühlkörpers 53 mit Kühlmittel dienen. Um eine Aufnahme 66 herum, sind bogenartig aneinandergereiht, erste Öffnungen 69 angeordnet Diese ersten Öffnungen 69 sind in Umfangsrichtung U beiderseits einer Aufnahme 66 angeordnet. Zwischen den Aufnahmen 66 und der zentralen Mitte 63 ist in Richtung zur zentralen Mitte 63 zumindest eine länglich geformte zweite Öffnung 72 angeordnet, wobei die zweite Öffnung 72 mit ihrer länglichen Form zumindest im Wesentlichen auf die zentrale Mitte 63 ausgerichtet ist. In weiterer Näherung kann auch festgestellt werden, daß zwischen den Aufnahmen 66 mit den ersten Öffnungen 69 und der zentralen Mitte 63 in Richtung zur zentralen Mitte 63 mehrere länglich geformte zweite Öffnungen 72 angeordnet sind, wobei die zweiten Öffnungen 72 mit ihrer länglichen Form zumindest im Wesentlichen auf die zentrale Mitte 63 ausgerichtet sind. Zwei Öffnungen 229, sozusagen in zweiter Reihe um die jeweilige Aufnahme 66, dienen zur Befestigung des Kühlkörpers 53 an der Verschaltungseinheit 144, in dem ein optionaler vorzugsweise klemmender Stift (Presspassung zwischen Stift und Öffnung 229) oder Schnapphaken der Verschaltungseinheit 144 in die jeweilige Öffnung 229 eingreift.

In dem Körperbereich 60 sind weiters drei zylindrische mit je einem Loch 74 versehene Senkbereiche 75 vorgesehen. Dort ist die Materialstärke des Kühlkörpers 53 auf ca. 40% dessen reduziert, die bei den Aufnahmen 66 vorgesehen ist. Diese Senkbereiche 75 dienen bei der Montage zur Befestigung der Gleichrichtereinrichtung 139 am Lagerschild 13.2. Eine Gewindehülse 78 dient zur Befestigung und Kontaktherstellung mit einem weiteren Bauteil der Gleichrichtereinrichtung 139 und ist wie bereits beim ersten Ausführungsbeispiel einstückig an den Kühlkörper 53 angeformt. Ein Einsetzdom 82 dient zur späteren Aufnahme und Befestigung eines sogenannten B+-Bolzens (B-Plus-Bolzen), an dem ein Ladekabel befestigt wird, um einer Fahrzeugbatterie elektrischen Strom zuführen zu können.

Wie bereits erwähnt, sind mehrere Aufnahmen 66 vorhanden, die am Umfang 81 des Kühlkörpers 53 voneinander beabstandet angeordnet sind.

Aus Figur 33 ist zu entnehmen, dass in einem Segment 84 zwischen zwei Aufnahmen 66 mehrere länglich geformte zweite Öffnungen 72 angeordnet sind, die sich zwischen zwei bogenförmig erstreckenden Holmen 87 erstrecken. Die zweiten Öffnungen 72 zwischen zwei bogenförmigen Holmen 87 sind durch Stege 90 getrennt. Die Stege 90 erstrecken sich vorzugsweise radial. Die beiden Holme 87 verlaufen zumindest in etwa kreisbogenförmig.

Um die Aufnahmen 66 herum sind die Öffnungen 69 angeordnet. Zur Verbesserung des Zugriffs zu nachfolgend gezeigten Anschlusskontakten, die in der Gleichrichtereinrichtung 139 neben den Öffnungen 69 positioniert werden, ist vorgesehen, Umrandungen 112 der Öffnungen 69 auf der Seite der Öffnungen 69, die einem Zentrum 113 einer Aufnahme 66 abgewandt sind, in ihrer Materialstärke in Achsrichtung (Drehachse 26) weniger stark auszuführen, als dies zwischen den Aufnahmen 66 und den Öffnungen 69 der Fall ist.

Am Außenumfang 232 des Kühlkörpers 53 befinden sich beispielhaft neun Hakenelemente 235. Je zwei paarweise angeordnete Hakenelemente 235 stehen sich so gegenüber, dass beide zusammen mit dem Außenumfang 232 einen Hinterschnitt bilden, auf den später nochmals eingegangen werden wird. Ein einzelnes Hakenelement 235 befindet sich an einem Ende des Kühlkörpers 53.

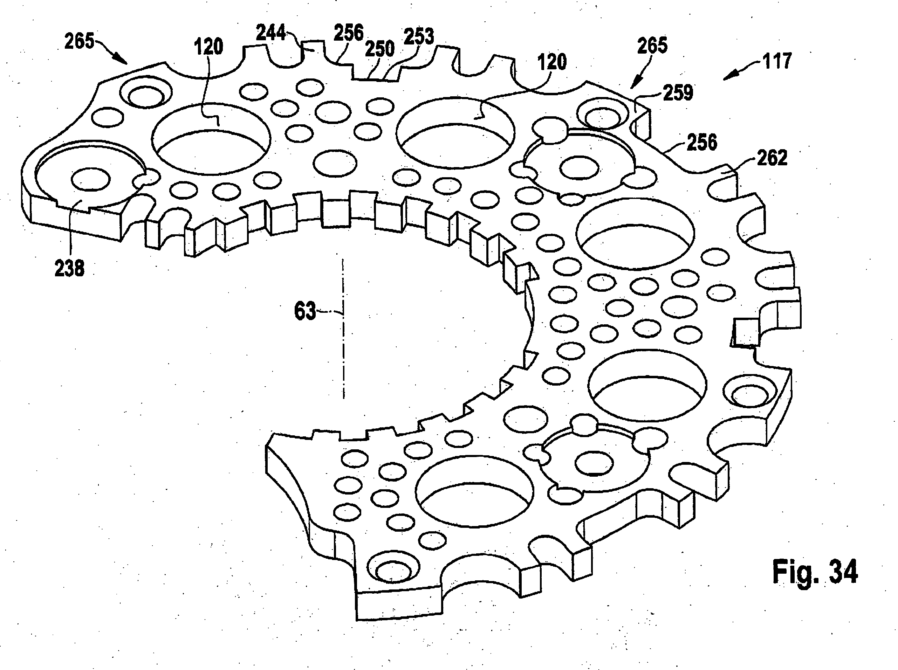

In Figur 34 ist eine räumliche Ansicht auf einen weiteren Kühlkörper 117 des Ausführungsbeispiels dargestellt. Der Kühlkörper 117 unterscheidet sich von dem in Figur 14a und 14b gezeigten Kühlkörper lediglich in der Anzahl der Aufnahmen 120. Gemäß Figur 34 sind nunmehr fünf Aufnahmen 120 verwirklicht.

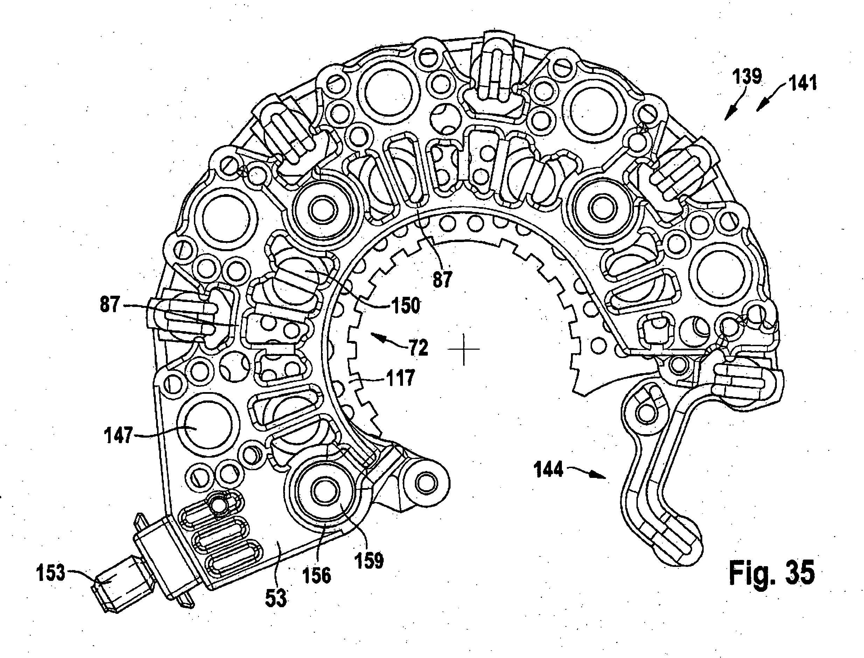

Figur 35 zeigt eine Draufsicht auf die Gleichrichtereinrichtung 139 bzw. zusammengebaute Kühleinrichtung 141 aus erstem Kühlkörper 53 (Pluskühlkörper), zweitem Kühlkörper 117 (Minuskühlkörper), Verschaltungseinheit 144, positiven Stromgleichrichtern 147 (Plusdioden), negativen Stromgleichrichtern 150 (Minusdioden), B+-Bolzen 153, Isolationshülsen 156 und Nieten 159 (Rohrnieten). Des Weiteren sind hier nicht erkennbare Distanzstücke verwendet. Die Ansicht auf die Kühleinrichtung 141 entspricht in Bezug zur Figur 1 bei abgenommener Schutzkappe 47 der Ansicht von rechts in Richtung der Drehachse 26. Die Verschaltungseinheit 144 ist wie in Figur 31 und 32 gezeigt aufgebaut.

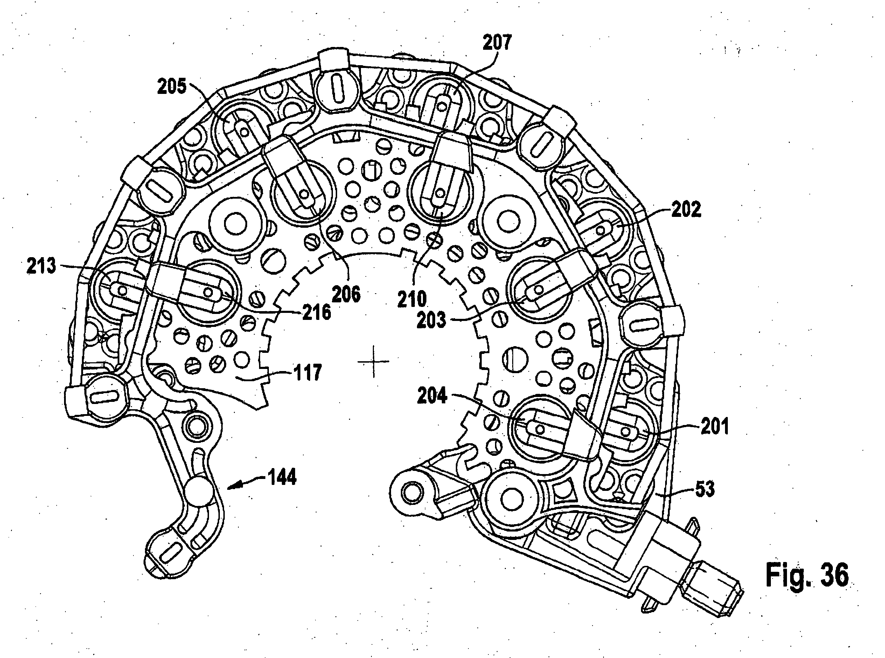

In Figur 36 ist auch zu erkennen, dass - wie bereits beim ersten Ausführungsbeispiel - die länglichen Öffnungen 72 axial (Drehachse 26) über den negativen Stromgleichrichtern 150 (Minusdioden) angeordnet sind. Die negativen Stromgleichrichter 150 (Minusdioden) sind auch hier - bezogen auf die Drehachse 26 als Zentrum - auf einem kleineren Radius als die positiven Stromgleichrichter 147 (Plusdioden). Der durch den inneren der beiden Holme 87 begrenzte Teil des Kühlkörpers 53 ist auf einem größeren Radius angeordnet als der Bereich des Kühlkörpers 117, der an dieser Umfangsstelle angeordnet ist.

Die eigentliche Befestigung und Kontaktgabe zwischen den Anschlusskontakten 180, 183, 186, 189, 192 und 195 und den Leiterenden 228 erfolgt wie in den zuvor beschriebenen Ausführungsbeispielen.

Figur 36 zeigt die zusammengebaute Kühleinrichtung 141 von der anderen, in Figur 35 nicht gezeigten Seite. Von dieser Seite sind Anschlusskontakte für die Dioden erkennbar, s. a. Figur 32 und zugehörige Beschreibung.

Die Funktion der Hakenelemente 235 ist wie bei den zuvor beschriebenen Ausführungsbeispielen.

## Patentansprüche

1. Gleichrichtereinrichtung (139) mit einer Kühleinrichtung (141) für eine elektrische Maschine (10), insbesondere Wechselstromgenerator, mit einem ersten Kühlkörper (53), der zumindest einen bogenförmigen Körperbereich (60) mit einer zentralen Mitte (63) aufweist und wobei der Kühlkörper (53) zumindest eine Aufnahme (66) aufweist, an der ein Stromgleichrichter (147) aufgenommen ist, mit Öffnungen (69, 72) im Kühlkörper (53), die zur Durchströmung eines Kühlmittels (41) geeignet sind, wobei um die Aufnahme (66) herum bogenartig aneinandergereiht erste Öffnungen (69) angeordnet sind, wobei die ersten Öffnungen (69) in Umfangsrichtung beiderseits einer Aufnahme (66) angeordnet sind und wobei zwischen der Aufnahme (66) und der zentralen Mitte (63) in Richtung zur zentralen Mitte (63) zumindest eine länglich geformte zweite Öffnung (72) angeordnet ist, wobei die zweite Öffnung (72) mit ihrer länglichen Form zumindest im Wesentlichen auf die zentrale Mitte (63) ausgerichtet ist, **dadurch gekennzeichnet, dass** sich in Umfangsrichtung (U) neben einer Aufnahme (66) ein rohrartiger Führungsstutzen (225) sowie ein Anschlusskontakt (180, 183, 186, 189, 192, 195) einer Verschaltungseinheit (144) befindet und ein sich am Kühlkörper (53) befindendes Hakenelement (235) den Führungsstutzen (225) hintergreift und dadurch den Führungsstutzen (225) der Verschaltungseinheit (144) führt.

2. Gleichrichtereinrichtung (139) nach Anspruch 1, **dadurch gekennzeichnet, dass** mehrere Aufnahmen (66) vorhanden sind, die am Umfang (81) des Kühlkörpers (53), vorzugsweise am Außenumfang, voneinander beabstandet angeordnet sind.

3. Gleichrichtereinrichtung (139) nach Anspruch 2, **dadurch gekennzeichnet, dass** zwischen zwei einander nächstgelegenen Aufnahmen (66) mehrere länglich geformte zweite Öffnungen (72) angeordnet sind, die sich zwischen zwei bogenförmig erstreckenden Holmen (87) erstrecken, wobei die zweiten Öffnungen (72) zwischen zwei bogenförmigen Holmen (87) durch Stege (90) getrennt sind, welche sich vorzugsweise radial erstrecken.

4. Gleichrichtereinrichtung (139) nach Anspruch 2 oder 3, **dadurch gekennzeichnet, dass** sich in Umfangsrichtung (U) zwischen zwei Aufnahmen (66) ein Überhang (92), vorzugsweise in Gestalt eines leiterartigen Kühlsegments (93), erstreckt, welches mit einem Holm (87) einstückig verbunden ist.

5. Gleichrichtereinrichtung (139)nach Anspruch 4, **dadurch gekennzeichnet, dass** der Überhang (92) in eine Umfangsrichtung an einem Rand (105) des Überhangs (92) zumindest eine Öffnung (108) aufweist, deren Umrandung (111) teilweise eine geringere Materialstärke als andere Öffnungen (96) des Überhangs (92) aufweist.

6. Gleichrichtereinrichtung (139)nach einem der Ansprüche 3 bis 5, **dadurch gekennzeichnet, dass** sich an den radial innen angeordneten Holm (87) nach radial innen weitere länglich geformte Öffnungen (72) anschließen, die nach radial innen durch einen weiteren Holm (87) begrenzt sind.

7. Gleichrichtereinrichtung (139)nach Anspruch 4 oder 5, **dadurch gekennzeichnet, dass** sich zwischen einem Überhang (92) und einer Aufnahme (66) eine Aussparung (94) befindet.

8. Gleichrichtereinrichtung (139) nach einem der vorstehenden Ansprüche, **dadurch gekennzeichnet, dass** sich die Aufnahme (66), die ersten Öffnungen (69) und die zumindest eine länglich geformte zweite Öffnung (72) ist einem Sektor (116) ausgehend von der zentralen Mitte (63) befinden, wobei der Sektor (116) eine Winkelbreite zwischen 25° und 40° aufweist.

9. Gleichrichtereinrichtung (139) nach einem der vorstehenden Ansprüche, **dadurch gekennzeichnet, dass** diese einen weiteren Löcher (123) aufweisenden Kühlkörper (117) aufweist, der im Wesentlichen ringsegmentförmig ist, wobei sich an zumindest einer Umfangsstelle (126) ein Überhang (127) befindet.

10. Gleichrichtereinrichtung (139) nach Anspruch 9, **dadurch gekennzeichnet, dass** der Überhang (127) die Gestalt eines leiterartigen Kühlsegments (129) mit Öffnungen (132) aufweist, die sich länglich nach radial außen erstrecken.

11. Gleichrichtereinrichtung (139) nach Anspruch 9, **dadurch gekennzeichnet, dass** der Überhang (127) eine gerippte Oberflächenstruktur mit radial ausgerichteten länglichen Kühlrippen (380) auf, wobei zwischen den Kühlrippen (380) vorzugsweise ein kannelierter Körperbereich ist.

12. Gleichrichtereinrichtung (139) nach einem der Ansprüche 9 bis 11, **dadurch gekennzeichnet, dass** ein radiales Profil des weiteren Kühlkörpers (117) in dem Umfangsbereich, in dem sich ein Überhang (127) befindet in Bezug zur Mitte (63) in Ringbereiche (390) und (391) eingeteilt ist, wobei der eine Ringbereich (391) Im Bezug zum anderen Ringbereich (390) radial weiter innen liegend ist und sich im einen Ringbereich (391) Kühlrippen (386) befinden und sich im anderen Ringbereich (390) Kühlrippen (380) befinden, wobei die Kühlrippen (386) des einen Ringbereichs (391) ein größeres Volumen als die Kühlrippen (380) des anderen Kühlbereichs (390) haben.

13. Gleichrichtereinrichtung (139) nach einem der Ansprüche 9 bis 11, **dadurch gekennzeichnet, dass** ein radiales Profil des weiteren Kühlkörpers (117) in dem Umfangsbereich, in dem sich ein Überhang (127) befindet in Bezug zur Mitte (63) in die Ringbereiche (390) und (391) eingeteilt ist, wobei der eine Ringbereich (391) im Bezug zum anderen Ringbereich (390) radial weiter innen liegend ist und sich im einen Ringbereich (391) Kühlrippen (386) befinden und sich im anderen Ringbereich (390) Kühlrippen (380) befinden, wobei die Kühlrippen (386) des einen Ringbereichs (391) auf halber Höhe dicker sind als die Kühlrippen (380) des anderen Kühlbereichs (390).

14. Gleichrichtereinrichtung (139) nach einem der Ansprüche 12 und 13, **dadurch gekennzeichnet, dass** in axialer Richtung betrachtet sich auf einer Seite des Stegs (226) der Verschaltungseinheit (144) die Kühlrippen (386) des einen Ringbereichs (391) befinden und sich auf der anderen Seite des Stegs (226) die Kühlrippen (380) des anderen Kühlbereichs (390) befinden.

15. Gleichrichtereinrichtung (139) nach einem der Ansprüche 9 bis 14, **dadurch gekennzeichnet, dass** bei dem Kühlkörper (117) die Umgebung einer Aufnahme (120) derart gestaltet ist, wonach unmittelbar um die Aufnahme (120) ausgehend von einem Zentrum (113) der Aufnahme (120) und nach radial innen zur zentralen Mitte (63) des Kühlkörpers (117) eine ringförmige Wand (393) einen größeren Umfangsbereich rund um die Aufnahme (120) überstreckt als dies radial außerhalb des Zentrums (113) der Aufnahme (120) der Fall ist.

16. Gleichrichtereinrichtung (139) nach Anspruch 15, **dadurch gekennzeichnet, dass** unmittelbar um die Aufnahme (120) herum und auf der der zentralen Mitte (63) des Kühlkörpers (117) abgewandten Seite der Aufnahme (120) eine Randrippe (395) angeordnet ist, die kleiner als die ringförmige Wand (393) ist.

17. Gleichrichtereinrichtung (139) nach einem der Ansprüche 9 bis 16, **dadurch gekennzeichnet, dass** die beiden Kühlkörper (53, 117) durch- und zwischenströmbar mit Abstand übereinander geschichtet sind und der Überhang (127) des weiteren Kühlkörpers (117) über dem Überhang (92) des ersten Kühlkörpers (53) angeordnet ist, wobei sich beide Überhänge (127, 92) in Umfangsrichtung (U) neben einem Führungsstutzen (225) der Verschaltungseinheit (144) befinden.

18. Gleichrichtereinrichtung (139)nach Anspruch 9 bis 17, **dadurch gekennzeichnet, dass** sich an einem Innenrand des einen Kühlkörpers (53) und am Innenrand des anderen Kühlkörpers (117) Löcher (72, 123) gegenüber stehen.

19. Gleichrichtereinrichtung (139)nach einem der vorstehenden Ansprüche 14 bis 18, **dadurch gekennzeichnet, dass** sich Stege (226) der Verschaltungseinheit (144) in einem in Bezug zur Mitte (63) radial äußeren Bereich unterhalb des ersten Kühlkörpers (53) auf einer dem Kühlkörper (117) abgewandten Seite befindet, wobei sich die Stege (226) unter einer äußeren Hälfte der radialen Erstreckung des Kühlkörpers (117) ist.

20. Elektrische Maschine mit einer Gleichrichtereinrichtung (139) nach einem der vorstehenden Ansprüche.

## Claims

1. Rectifier device (139) having a cooling device (141) for an electrical machine (10), in particular an AC generator, having a first heat sink (53) which has at least one arcuate body region (60) with a central mid-point (63), and wherein the heat sink (53) has at least one receptacle (66) on which a current rectifier (147) is held, having openings (69, 72) in the heat sink (53), the said openings being suitable for a coolant (41) to flow through, wherein first openings (69) are arranged around the receptacle (66) in a manner lined up in an arc, wherein the first openings (69) are arranged on both sides of a receptacle (66) in the circumferential direction, and wherein, at least one elongate second opening (72) is arranged between the receptacle (66) and the central mid-point (63) in the direction of the central mid-point (63), wherein the second opening (72), by way of its elongate shape, is oriented at least substantially toward the central mid-point (63), **characterized in that** a tubular guide stub (225) and a connection contact (180, 183, 186, 189, 192, 195) of an interconnection unit (144) are located next to a receptacle (66) in the circumferential direction (U), and a hook element (235) which is located on the heat sink (53) engages behind the guide stub (225) and as a result guides the guide stub (225) of the interconnection unit (144).

2. Rectifier device (139) according to Claim 1, **characterized in that** a plurality of receptacles (66) are provided, the said receptacles being arranged on the circumference (81) of the heat sink (53), preferably on the outer circumference, such that they are at a distance from one another.

3. Rectifier device (139) according to Claim 2, **characterized in that** a plurality of elongate second openings (72) are arranged between two receptacles (66) which are situated close to one another, the said second openings extending between two bars (87) which extend in an arcuate manner, wherein the second openings (72) between two arcuate bars (87) are separated by webs (90) which preferably extend in a radial manner.

4. Rectifier device (139) according to Claim 2 or 3, **characterized in that** an overhang (92), preferably in the form of a conductor-like cooling segment (93) which is integrally connected to a bar (87), extends between two receptacles (66) in the circumferential direction (U).

5. Rectifier device (139) according to Claim 4, **characterized in that** the overhang (92) has at least one opening (108) on an edge (105) of the overhang (92) in a circumferential direction, the border (111) of the said opening having a lower material thickness than other openings (96) in the overhang (92) in parts.

6. Rectifier device (139) according to one of Claims 3 to 5, **characterized in that**, radially on the inside, further elongate openings (72) adjoin the bar (87) which is arranged radially on the inside, the said further elongate openings being delimited radially on the inside by a further bar (87).

7. Rectifier device (139) according to Claim 4 or 5, **characterized in that** a cutout (94) is located between an overhang (92) and a receptacle (66).

8. Rectifier device (139) according to one of the preceding claims, **characterized in that** the receptacle (66), the first openings (69) and the at least one elongate second opening (72) are located in a sector (116) starting from the central mid-point (63), wherein the sector (116) has an angular width of between 25° and 40°.

9. Rectifier device (139) according to one of the preceding claims, **characterized in that** it has a heat sink (117) which has further holes (123) and which is substantially in the form of a segment of a ring, wherein an overhang (127) is located at at least one circumferential point (126).

10. Rectifier device (139) according to Claim 9, **characterized in that** the overhang (127) has the form of a conductor-like cooling segment (129) with openings (132) which extend radially to the outside in an elongate manner.

11. Rectifier device (139) according to Claim 9, **characterized in that** the overhang (127) has a ribbed surface structure with radially oriented elongate cooling ribs (380), wherein there is preferably a fluted body region between the cooling ribs (380).

12. Rectifier device (139) according to one of Claims 9 to 11, **characterized in that** a radial profile of the further heat sink (117) is subdivided into annular regions (390) and (391) in relation to the mid-point (63) in the circumferential region in which an overhang (127) is located, wherein one annular region (391) is situated radially further towards the inside in relation to the other annular region (390) and cooling ribs (386) are located in one annular region (391) and cooling ribs (380) are located in the other annular region (390), wherein the cooling ribs (386) of one annular region (391) have a larger volume than the cooling ribs (380) of the other cooling region (390).

13. Rectifier device (139) according to one of Claims 9 to 11, **characterized in that** a radial profile of the further heat sink (117) is subdivided into the annular regions (390) and (391) in relation to the middle (63) in the circumferential region in which an overhang (127) is located, wherein one annular region (391) is situated radially further towards the inside in relation to the other annular region (390) and cooling ribs (386) are located in one annular region (391) and cooling ribs (380) are located in the other annular region (390), wherein the cooling ribs (386) of one annular region (391) are thicker than the cooling ribs (380) of the other cooling region (390) halfway up.

14. Rectifier device (139) according to one of Claims 12 and 13, **characterized in that**, as viewed in the axial direction, the cooling ribs (386) of one annular region (391) are located on one side of the web (226) of the interconnection unit (144), and the cooling ribs (380) of the other cooling region (390) are located on the other side of the web (226).

15. Rectifier device (139) according to one of Claims 9 to 14, **characterized in that**, in the heat sink (117), the area surrounding a receptacle (120) is designed in such a way that, immediately around the receptacle (120) starting from a centre (113) of the receptacle (120) and radially towards the inside in the direction of the central mid-point (63) of the heat sink (117), an annular wall (393) extends over a larger circumferential region around the receptacle (120) than is the case radially outside the centre (113) of the receptacle (120).

16. Rectifier device (139) according to Claim 15, **characterized in that** an edge rib (395) which is smaller than the annular wall (393) is arranged immediately around the receptacle (120) and on that side of the receptacle (120) which is averted from the central mid-point (63) of the heat sink (117).

17. Rectifier device (139) according to one of Claims 9 to 16, **characterized in that** the two heat sinks (53, 117) are layered one above the other at a distance from one another such that media can flow through and between, and the overhang (127) of the further heat sink (117) is arranged above the overhang (92) of the first heat sink (53), wherein the two overhangs (127, 92) are located next to a guide stub (225) of the interconnection unit (144) in the circumferential direction (U).

18. Rectifier device (139) according to Claims 9 to 17, **characterized in that** holes (72, 123) are situated opposite one another on an inner edge of one heat sink (53) and on the inner edge of the other heat sink (117).

19. Rectifier device (139) according to one of the preceding Claims 14 to 18, **characterized in that** webs (226) of the interconnection unit (144) are located in a radially outer region in relation to the mid-point (63) below the first heat sink (53) on a side which is averted from the heat sink (117), wherein the webs (226) are found below an outer half of the radial extent of the heat sink (117).

20. Electrical machine comprising a rectifier device (139) according to one of the preceding claims.

## Revendications

1. Dispositif redresseur (139) doté d'un dispositif de refroidissement (141), pour une machine électrique (10), en particulier un générateur de courant alternatif, et présentant un premier corps de refroidissement (53) qui présente au moins une partie (60) en forme d'arc et est doté d'un milieu central (63),
le corps de refroidissement (53) présentant au moins un logement (66) sur lequel un redresseur de courant (147) est repris, doté d'ouvertures (69, 72) ménagées dans le corps de refroidissement (53) et convenant pour permettre le passage d'un fluide de refroidissement (41), des premières ouvertures (69) étant rangées en arc autour du logement (66), les premières ouvertures (69) étant disposées dans la direction périphérique des deux côtés d'un logement (66),
au moins une deuxième ouverture (72) de forme allongée étant disposée entre le logement (66) et le milieu central (63) en direction du milieu central (63), la deuxième ouverture (72) de forme allongée étant alignée au moins essentiellement sur le milieu central (63),
**caractérisé en ce que**
une tubulure tubulaire de guidage (225) ainsi qu'un contact de raccordement (180, 183, 186, 189, 192, 195) d'une unité de branchement (144) sont disposés à côté d'un logement (66) dans la direction périphérique (U) et un élément en crochet (235) situé sur le corps de refroidissement (53) accroche par l'arrière la tubulure de guidage (225) et conduit ainsi la tubulure de guidage (225) de l'unité de raccordement (144).

2. Dispositif redresseur (139) selon la revendication 1, **caractérisé en ce que** plusieurs logements (66) sont prévus à la périphérie (81) du corps de refroidissement (53), de préférence à la périphérie extérieure et à distance les uns des autres.

3. Dispositif redresseur (139) selon la revendication 2, **caractérisé en ce que** plusieurs deuxièmes ouvertures (72) de forme allongée qui s'étendent entre deux longerons (87) en forme d'arc sont disposées entre deux logements (66) voisins l'un de l'autre, les deuxièmes ouvertures (72) étant séparées entre deux longerons (87) en forme d'arc par des traverses (90) qui s'étendent de préférence radialement.

4. Dispositif redresseur (139) selon les revendications 2 ou 3, **caractérisé en ce qu'**un surplomb (92) qui présente de préférence la forme d'un segment de refroidissement (93) de type conduit s'étend dans la direction périphérique (U) entre deux logements (66) et est relié d'un seul tenant à un longeron (87).

5. Dispositif redresseur (139) selon la revendication 4, **caractérisé en ce que** dans la direction périphérique, le surplomb (92) présente sur un bord (105) du surplomb (92) au moins une ouverture (108) dont la bordure (111) présente une épaisseur de matière plus petite que d'autres ouvertures (96) du surplomb (92).

6. Dispositif redresseur (139) selon l'une des revendications 3 à 5, **caractérisé en ce que** d'autres ouvertures (72) de forme allongée radialement vers l'intérieur se raccordent au longeron (87) disposé radialement à l'intérieur et sont délimitées radialement vers l'intérieur par un autre longeron (87).

7. Dispositif redresseur (139) selon les revendications 4 ou 5, **caractérisé en ce qu'**une découpe (94) est située entre un surplomb (92) et un logement (66).

8. Dispositif redresseur (139) selon l'une des revendications précédentes, **caractérisé en ce que** le logement (66), les premières ouvertures (69) et la ou les deuxièmes ouvertures (72) de forme allongée sont situées sur un secteur (116) partant du milieu central (63), le secteur (116) présentant une amplitude angulaire comprise entre 25° et 40°.

9. Dispositif redresseur (139) selon l'une des revendications précédentes, **caractérisé en ce qu'**il présente un autre corps de refroidissement (117) présentant des trous (123) et essentiellement en forme de segment annulaire, un surplomb (127) étant situé sur au moins un emplacement périphérique (126).

10. Dispositif redresseur (139) selon la revendication 9, **caractérisé en ce que** le surplomb (127) présente la forme d'un segment de refroidissement (129) de type conduit doté d'ouvertures (132) qui s'étendent de manière allongée radialement vers l'extérieur.

11. Dispositif redresseur (139) selon la revendication 9, **caractérisé en ce que** le surplomb (127) présente une structure de surface nervurée dotée de nervures de refroidissement (380) allongées, orientées radialement, une partie cannelée de corps étant de préférence prévue entre les nervures de refroidissement (380).

12. Dispositif redresseur (139) selon l'une des revendications 9 à 11, **caractérisé en ce qu'**un profil radial de l'autre corps de refroidissement (117), dans la partie de la périphérie dans laquelle est situé un surplomb (127) est divisée par rapport au milieu (63) en parties annulaires (390) et (391), une partie annulaire (391) étant située radialement plus vers l'intérieur que l'autre partie annulaire (390), des nervures de refroidissement (386) étant situées dans une partie annulaire (391) et des nervures de refroidissement (380) étant situées dans l'autre partie annulaire (390), les nervures de refroidissement (386) de la partie annulaire (391) ayant un plus grand volume que les nervures de refroidissement (380) de l'autre partie annulaire (390).

13. Dispositif redresseur (139) selon l'une des revendications 9 à 11, **caractérisé en ce qu'**un profil radial de l'autre corps de refroidissement (117), dans la partie de la périphérie dans laquelle est situé un surplomb (127) est divisée par rapport au milieu (63) en parties annulaires (390) et (391), une partie annulaire (391) étant située radialement plus vers l'intérieur que l'autre partie annulaire (390), des nervures de refroidissement (386) étant situées dans une partie annulaire (391) et des nervures de refroidissement (380) étant situées dans l'autre partie annulaire (390), les nervures de refroidissement (386) de la partie annulaire (391) étant plus épaisses sur la moitié de leur hauteur que les nervures de refroidissement (380) de l'autre partie de refroidissement (390).

14. Dispositif redresseur (139) selon l'une des revendications 12 et 13, **caractérisé en ce que** dans la direction axiale, sur un côté de la traverse (226) de l'unité de branchement (144), les nervures de refroidissement (386) d'une partie annulaire (391) sont situées et les nervures de refroidissement (380) de l'autre partie annulaire (390) sont situées sur l'autre côté de la traverse (226).

15. Dispositif redresseur (139) selon l'une des revendications 9 à 14, **caractérisé en ce que** sur le corps de refroidissement (117), l'environnement d'un logement (120) est configuré de telle sorte que directement autour du logement (120), partant d'un centre (113) du logement (120) et radialement vers l'intérieur en direction du milieu central (63) du corps de refroidissement (117), une paroi annulaire (393) s'étend sur une plus grande partie de la périphérie circulaire qui entoure le logement (120) que radialement à l'extérieur du centre (113) du logement (120).

16. Dispositif redresseur (139) selon la revendication 15, **caractérisé en ce qu'**une nervure de bordure (395) plus petite que la paroi annulaire (393) est disposée directement autour du logement (120) et sur le côté du logement (120) non tourné vers le milieu central (63) du corps de refroidissement (117).

17. Dispositif redresseur (139) selon l'une des revendications 9 à 16, **caractérisé en ce que** les deux corps de refroidissement (53, 117) sont revêtus de manière à pouvoir être traversés et balayés à distance l'un de l'autre, le surplomb (127) de l'autre corps de refroidissement (117) étant disposé au-dessus du surplomb (92) du premier corps de refroidissement (53), les deux surplombs (127, 92) étant situés dans la direction périphérique (U) à côté d'une tubulure de guidage (225) de l'unité de raccordement (144).

18. Dispositif redresseur (139) selon les revendications 9 à 17, **caractérisé en ce que** des trous (72, 123) se font face sur une bordure intérieure d'un corps de refroidissement (53) et sur le bord intérieur de l'autre corps de refroidissement (117).

19. Dispositif redresseur (139) selon l'une des revendications 14 à 18 qui précèdent, **caractérisé en ce que** des traverses (226) de l'unité de raccordement (144) sont situées dans une partie radialement extérieure par rapport au milieu (63), en dessous du premier corps de refroidissement (53) sur un côté non tourné vers le corps de refroidissement (117), les traverses (226) étant situées en dessous de la moitié extérieure de l'extension radiale du corps de refroidissement (117).

20. Machine électrique dotée d'un dispositif redresseur (139) selon l'une des revendications précédentes.
